# EUROPEAN PATENT APPLICATION

(11) **EP 3 804 501 A1**
(43) Date of publication of application: **14.04.2021**
(21) Application number: 19815349.6
(22) Date of filing: 26.04.2019
(51) Int. Cl.: A01G 2/35

(54) **MEMBER FOR GRAFTING USE, MEMBER SET FOR GRAFTING USE, FIXING TOOL FOR GRAFTING USE, AND METHOD FOR PRODUCING GRAFT SEEDLING**

(30) Priority: 06.06.2018 JP 2018108807
(71) Applicant: GRA&GREEN Inc., Nagoya-shi, Aichi 464-0814 (JP)
(72) Inventor: MORI, Tsuyoshi, Nagoya-shi, Aichi 464-0814 (JP); NIWA, Masaki, Nagoya-shi, Aichi 464-0814 (JP); KONDO, Kuniharu, Nagoya-shi, Aichi 465-0077 (JP)
(74) Representative: Cabinet Bleger-Rhein-Poupon
(86) International application number: PCT/JP2019/018042
(87) International publication number: WO 2019/235111

(57) **Abstract**

Provided is a grafting member that can improve grafting accuracy and productivity of grafted seedlings. The present disclosure is a grafting member including: a scion part that includes a first contact portion configured to come into contact with a stem of a plant at a first position; a rootstock part detachable from the scion part, the rootstock part including a second contact portion configured to come into contact with the stem of the plant at a second position located close to roots of the plant as compared with the first position; a first holder securable to the scion part, the first holder including a first press portion configured to press the stem of the plant against the first contact portion; and a second holder securable to the rootstock part, the second holder including a second press portion configured to press the stem of the plant against the second contact portion. A space is provided between the first holder secured to the scion part and the second holder secured to the rootstock part to expose the stem of the plant.

## Description

### CROSS-REFERENCE TO RELATED APPLICATION

This international application claims priority based on Japanese Patent Application No. 2018-108807 filed on June 6, 2018 in the Japan Patent Office, the entire disclosure of which is incorporated herein by reference.

### TECHNICAL FIELD

The present disclosure relates to a grafting member, a grafting member set, a holder for grafting, and a method for producing grafted seedlings.

### BACKGROUND ART

Grafting is widely performed in the field of agriculture and horticulture for avoiding replant failure, improving the quality and the yield, and increasing of new varieties, and other purposes. Although grafting is widely spread regardless of whether for business use or home use, grafting is mostly carried out manually.

Carrying out the manual grafting requires a certain level of practice; and thus qualities of grafted seedlings tend to vary. For this reason, a seedling nursery member is proposed in which stems of plants germinated from seeds in a chip-shaped member are cut, and units are separated into scion parts and rootstock parts while the cut-off stems are retained (see Patent Document 1).

In the seedling nursery member, seedlings for grafting can be prepared in a convenient way, and cut sections of the stems retained in the units can be accurately joined.

### PRIOR ART DOCUMENTS

### PATENT DOCUMENTS

Patent Document 1: International Patent Publication No. 2016/129683

### SUMMARY OF THE INVENTION

### PROBLEMS TO BE SOLVED BY THE INVENTION

In the above-described seedling nursery member, the stems of plants are not secured; there is a margin for improvement in positional accuracy of stems to be joined. The above-described seedling nursery member can be still improved in productivity through, for example, sorting of barren individuals, avoidance of contact between roots and the member, and adjustment of height of growing plants.

It is desirable that one aspect of the present disclosure provides a grafting member that can achieve improved grafting accuracy and productivity of grafted seedlings.

### MEANS FOR SOLVING THE PROBLEMS

One aspect of the present disclosure provides a grafting member including a scion part, a rootstock part, a first holder, and a second holder. The scion part includes at least one first contact portion configured to come into contact with a stem of a plant at a first position. The rootstock part is detachable from the scion part. The rootstock part includes at least one second contact portion configured to come into contact with the stem of the plant at a second position located close to roots of the plant as compared with the first position.

The first holder is securable to the scion part. The first holder includes at least one first press portion configured to press the stem of the plant against the at least one first contact portion. The second holder is securable to the rootstock part. The second holder includes at least one second press portion configured to press the stem of the plant against the at least one second contact portion. A space is provided between the first holder secured to the scion part and the second holder secured to the rootstock part to expose the stem of the plant.

In the above-described configuration, the first contact portion and the first press portion, and the second contact portion and the second press portion enable securing of the stems of the plants respectively in the scion part and the rootstock part in the vicinity of cut sections. Accordingly, positional accuracy of the stems to be joined is improved. As a result, grafting accuracy is improved.

Since already-grown plants are used in the grafting member of the present disclosure, it is possible to avoid losses that may be generated, for example, due to barren individuals in a case where seeds are germinated inside the member. It is also possible to avoid the inside of the member being damaged due to growing roots, and avoid the plants being damaged when the roots, biting into the member, are removed from the member. In addition, it is possible to easily and reliably acquire rootstocks with a certain length of hypocotyls. As a result, productivity of grafted seedlings can be improved.

Since the size of the member can be easily changed in accordance with the size of the plants in the present disclosure, it is possible to graft various types of plants. Moreover, since one type of the grafting member can be used for both scions and rootstocks, the equipment cost can be reduced.

In one aspect of the present disclosure, the at least one first contact portion may include a pair of first receiving surfaces provided at a position where the pair of first receiving surfaces faces the at least one first press portion, and a distance between the pair of first receiving surfaces may decrease along a direction of pressing the first holder. The at least one first press portion may include a pair of first guide surfaces provided at a position where the pair of first guide surfaces faces the at least one first contact portion, and a distance between the pair of first guide surfaces may increase along the direction of pressing the first holder. The at least one second contact portion may include a pair of second receiving surfaces provided at a position where the pair of second receiving surfaces faces the at least one second press portion, and a distance between the pair of second receiving surfaces may decrease along a direction of pressing the second holder. The at least one second press portion may include a pair of second guide surfaces provided at a position where the pair of second guide surfaces faces the at least one second contact portion, and a distance between the second guide surfaces may increase along the direction of pressing the second holder. In the above-described configuration, securing of the first holder and the second holder enables the stem of plant to be guided to and secured at a specified position.

In one aspect of the present disclosure, each of the at least one first press portion and the at least one second press portion may include a cushioning material disposed in a connected portion between the pair of first guide surfaces or between the pair of second guide surfaces. In the above-described configuration, it is possible to secure the stems at the specified positions while the difference in diameter of the stems is absorbed by the cushioning materials.

In one aspect of the present disclosure, each of the scion part and the rootstock part may include two or more plates provided with the at least one first contact portion or the at least one second contact portion. The two or more plates may include at least one first plate and at least one second plate displaced relative to the at least one first plate in a direction parallel to an axis of the stem of the plant. In the above-described configuration, by having the first holder and the second holder engaged respectively with the first plate and the second plate of the scion part and those of the rootstock part, it is possible to secure the first holder and the second holder without providing securing members for the holders.

In one aspect of the present disclosure, the at least one first press portion may include a first cushioning material configured to be deformed by contact of the stem of the plant. The at least one second press portion may include a second cushioning material configured to be deformed by contact of the stem of the plant. In the above-described configuration, the first cushioning material and the second cushioning material can inhibit displacement of the stems. As a result, grafting accuracy is improved.

In one aspect of the present disclosure, the at least one first press portion may include a pair of first guide surfaces spaced apart from each other and protruding in a direction of pressing the first holder beyond the first cushioning material, and a distance between the pair of first guide surfaces may increase along the direction of pressing the first holder. The at least one second press portion may include a pair of second guide surfaces spaced apart from each other and protruding in a direction of pressing the second holder beyond the second cushioning material, and a distance between the pair of second guide surfaces may increase along the direction of pressing the second holder. The above-described configuration facilitates to easily and accurately guide the stems of the plants to the first cushioning material and the second cushioning material.

In one aspect of the present disclosure, the first cushioning material may be disposed to overlap a part of the pair of first guide surfaces in a direction parallel to an axis of the stem of the plant. The second cushioning material may be disposed to overlap a part of the pair of second guide surfaces in the direction parallel to the axis of the stem of the plant. The above-described configuration facilitates positioning of the first cushioning material and the second cushioning material on the first holder or the second holder. As a result, the first cushioning material and the second cushioning material can be easily replaced.

In one aspect of the present disclosure, the first holder may include two or more first press portions as the at least one first press portion, and a first cushioning material structure disposed across the two or more first press portions. The second holder may include two or more second press portions as the at least one second press portion, and second cushioning material structure disposed across the two or more second press portions. The first cushioning material provided to each first press portion of the two or more first press portions may be a part of the first cushioning material structure. The second cushioning material provided to each second press portion of the two or more second press portions may be a part of the second cushioning material structure. In the above-described configuration, it is possible to reduce the number of parts disposed in the holders. As a result, attachment and replacement of cushioning materials can be facilitated.

In one aspect of the present disclosure, the at least one first contact portion may include a pair of first receiving surfaces provided at a position where the pair of first receiving surfaces faces the at least one first press portion, and a distance between the pair of first receiving surfaces may decrease along a direction of pressing the first holder. The at least one second contact portion may include a pair of second receiving surfaces provided at a position where the pair of second receiving surfaces faces the at least one second press portion, and a distance between the pair of second receiving surfaces may decrease along a direction of pressing the second holder. In the above-described configuration, securing of the first holder and the second holder enables the stem of plant to be guided to and secured at a specified position.

In one aspect of the present disclosure, the at least one first contact portion may include a first protrusion provided in a connected portion between the pair of first receiving surfaces, and the first protrusion may protrude in a direction parallel to an axis of the stem of the plant beyond the pair of first receiving surfaces. The at least one second contact portion may include a second protrusion provided in a connected portion between the pair of second receiving surfaces, and the second protrusion may protrude in the direction parallel to the axis of the stem of the plant beyond the pair of second receiving surfaces. In the above-described configuration, the stem can be easily guided to a securing position between the first contact portion and the first press portion, and between the second contact portion and the second press portion.

In one aspect of the present disclosure, a width of the first protrusion, viewed from the direction of pressing the first holder, may decrease with an increase in distance from the pair of first receiving surfaces. A width of the second protrusion, viewed from the direction of pressing the second holder, may decrease with an increase in distance from the pair of second receiving surfaces. The above-described configuration further facilitates guiding of the stem to the securing position.

In one aspect of the present disclosure, each pair of the pair of first receiving surfaces and the pair of second receiving surfaces may include a curved portion that is bent in view from a direction parallel to an axis of the stem of the plant. The above-described configuration can inhibit the stem from being damaged when the stem is guided by the first holder and the second holder to the specified position.

In one aspect of the present disclosure, each pair of the pair of first receiving surfaces and the pair of second receiving surfaces may further include a flat portion provided in a connected portion of the pair of first receiving surfaces or in a connected portion of the pair of second receiving surfaces. The flat portion may be constituted with a planar surface parallel to the axis of the stem of the plant. The above-described configuration can accurately guide the stem of plant to the specified position by the first holder and the second holder, while inhibiting biting of the stem of the plant.

One aspect of the present disclosure may further include a securing mechanism that secures the scion part to the rootstock part. Due to the above-described configuration, a rootstock and a scion after joining can be pressed against each other. As a result, it is possible to inhibit separation between the rootstock and the scion during healing or during transportation.

One aspect of the present disclosure may further include a support part configured to support a pod where the roots of the plant are contained. Due to the above-described configuration, the plant can be stably retained during a period before cutting and after joining.

In one aspect of the present disclosure, the rootstock part may have a shape that is a mirror image of the scion part with respect to a plane perpendicular to an axis of the stem of the plant. Due to the above-described configuration, the same constituent member can be used for both the scion part and the rootstock part. As a result, the cost of the grafting member can be reduced.

Another aspect of the present disclosure provides a grafting member set including a first grafting member and a second grafting member. The first grafting member includes a scion part and a first holder. The scion part includes at least one first contact portion configured to come into contact with a stem of a first plant. The first holder is securable to the scion part, and the first holder includes at least one first press portion configured to press the stem of the first plant against the at least one first contact portion.

The second grafting member includes a rootstock part and a second holder. The rootstock part includes at least one second contact portion configured to come into contact with a stem of a second plant. The second holder is securable to the rootstock part, and the second holder includes at least one second press portion configured to press the stem of the second plant against the at least one second contact portion. The scion part of the first grafting member is securable, while the first holder is secured to the scion part, to the rootstock part of the second grafting member while the second holder is secured to the rootstock part.

In the above-described configuration, the first holder and the second holder enable securing of the stems of the plants in the vicinity of the cut sections, improving grafting accuracy. Moreover, use of already-grown plants improves productivity of grafted seedlings.

Another aspect of the present disclosure provides a holder for grafting. The holder for grafting is secured to at least one of a scion part and a rootstock part, the scion part including at least one first contact portion configured to come into contact with a stem of a plant at a first position, the rootstock part being detachable from the scion part, and the rootstock part including at least one second contact portion configured to come into contact with the stem of the plant at a second position that is close to roots of the plant as compared with the first position.

The holder for grafting includes at least one press portion configured to press the stem of the plant against the at least one first contact portion or the at least one second contact portion. The holder for grafting is configured to be secured to the scion part or the rootstock part to provide a space between the first position and the second position to expose the stem of the plant. The at least one press portion includes a cushioning material configured to be deformed by contact of the stem of the plant.

Due to the above-described configuration, the holder for grafting is joined with the scion part and the rootstock part configured to retain the plants. This improves grafting accuracy, productivity, and so on as compared to conventional art.

Another aspect of the present disclosure provides a method for producing grafted seedling. The method includes: preparing the aforementioned grafting member as a first grafting member, and the aforementioned grafting member as a second grafting member; bringing the at least one first contact portion of the scion part in the first grafting member into contact with a stem of at least a first plant while the rootstock part is attached to the scion part, and bringing the at least one second contact portion of the rootstock part in the first grafting member into contact with the stem of at least the first plant; securing the first holder and the second holder in the first grafting member so as to secure the stem of at least the first plant between the at least one first contact portion and the at least one first press portion and between the at least one second contact portion and the at least one second press portion; cutting the stem of at least the first plant in the space between the first holder and the second holder in the first grafting member; bringing the at least one first contact portion of the scion part in the second grafting member into contact with a stem of at least a second plant while the rootstock part is attached to the scion part, and bringing the at least one second contact portion of the rootstock part in the second grafting member into contact with the stem of at least the second plant; securing the first holder and the second holder in the second grafting member so as to secure the stem of at least the second plant between the at least one first contact portion and the at least one first press portion and between the at least one second contact portion and the at least one second press portion; cutting the stem of at least the second plant in the space between the first holder and the second holder in the second grafting member; and joining a cut surface of the stem of at least the first plant secured by the scion part of the first grafting member and a cut surface of the stem of at least the second plant secured by the rootstock part of the second grafting member.

Due to the above-described configuration, grafting accuracy is improved as described above. Productivity of grafted seedlings can be also improved since the already-grown plants are used. Furthermore, grafting can be performed irrespective of the size of plants. Moreover, since one type of the grafting member can be used for both scions and rootstocks, the equipment cost can be reduced.

Another aspect of the present disclosure provides a method for producing grafted seedling. The method includes: preparing the first grafting member and the second grafting member of the aforementioned grafting member set; bringing the at least one first contact portion of the scion part in the first grafting member into contact with a stem of at least a first plant; securing the first holder so as to secure the stem of at least the first plant between the at least one first contact portion and the at least one first press portion; cutting the stem of at least the first plant at a position close to roots of at least the first plant as compared with the first holder; bringing the at least one second contact portion of the rootstock part in the second grafting member into contact with a stem of at least a second plant; securing the second holder so as to secure the stem at least the second plant between the at least one second contact portion and the at least one second press portion; cutting the stem of at least the second plant at a position away from the roots of at least the second plant as compared with the second holder; and joining a cut surface of the stem of at least the first plant secured by the scion part of the first grafting member and a cut surface of the stem of at least the second plant secured by the rootstock part of the second grafting member.

Due to the above-described configuration, grafting accuracy and productivity of grafted seedlings are improved as described above.

### BRIEF DESCRIPTION OF THE DRAWINGS

FIG. 1 is a schematic perspective view showing a grafting member in an embodiment.
FIG. 2 is a schematic diagram showing a state in which plants are retained in the grafting member in Fig. 1.
FIG. 3A is a schematic perspective view showing a scion part of the grafting member in Fig. 1, FIG. 3B is a schematic plan view showing the scion part, and FIG. 3C is a schematic front view showing of the scion part.
FIG. 4A is a schematic perspective view showing a rootstock part of the grafting member in Fig. 1, FIG. 4B is a schematic plan view showing the rootstock part, and FIG. 4C is a schematic front view showing of the rootstock part.
FIG. 5 is a schematic diagram illustrating a fixing procedure of a first holder and a second holder of the grafting member in Fig. 1.
FIG. 6A is a schematic perspective view showing the first holder of the grafting member in Fig. 1, FIG. 6B is a schematic plan view showing the first holder, and FIG. 6C is a schematic rear view showing of the first holder.
FIG. 7 is a schematic perspective view showing the second holder of the grafting member in Fig. 1.
FIG. 8 is a schematic perspective view showing a support part of the grafting member in Fig. 1.
FIG. 9 is a schematic perspective view showing a grafting member in an embodiment different from that in Fig. 1.
FIG. 10A is a schematic perspective view showing a scion part of the grafting member in Fig. 9, and FIG. 10B is a schematic front view showing of the scion part.
FIG. 11 is a schematic perspective view showing a rootstock part of the grafting member in Fig. 9.
FIG. 12A is a schematic perspective view showing a first holder of the grafting member in Fig. 9, FIG. 12B is a schematic plan view showing the first holder, and FIG. 12C is a schematic rear view showing of the first holder.
FIG. 13 is a schematic perspective view showing a second holder of the grafting member in Fig. 9.
FIG. 14 is a schematic perspective view showing a support part of the grafting member in Fig. 9.
FIG. 15 is a schematic perspective view showing a grafting member in an embodiment different from those in Fig. 1 and Fig. 9.
FIG. 16 is a schematic diagram showing a state in which plants are retained in the grafting member in Fig. 15.
FIG. 17A is a schematic perspective view showing a scion part of the grafting member in Fig. 15, FIG. 17B is a schematic bottom view showing the scion part, and FIG. 17C is a schematic front view showing of the scion part.
FIG. 18 is a schematic perspective view showing a rootstock part of the grafting member in Fig. 15.
FIG. 19 is a schematic diagram illustrating a fixing procedure of a first holder and a second holder of the grafting member in Fig. 15.
FIG. 20A is a schematic perspective view showing the first holder of the grafting member in Fig. 15, FIG. 20B is a schematic bottom view showing the first holder, and FIG. 20C is a schematic rear view showing of the first holder.
FIG. 21A is a schematic partial enlarged view showing a press portion in an embodiment different from that in Fig. 20A, and FIG. 21B is a schematic partial enlarged view showing the press portion in an embodiment different from those in Fig. 20A and Fig. 21A.
FIG. 22 is a schematic perspective view showing the second holder of the grafting member in Fig. 15.
FIG. 23 is a schematic perspective view showing a support part of the grafting member in Fig. 15.
FIG. 24 is a schematic perspective view showing a grafting member in an embodiment different from those in Fig. 1, Fig. 9, and Fig. 15.
FIG. 25A is a schematic perspective view showing a scion part of the grafting member in Fig. 24, FIG. 25B is a schematic bottom view showing the scion part, and FIG. 25C is a schematic front view showing of the scion part.
FIG. 26A is a schematic perspective view showing a first holder of the grafting member in Fig. 24, FIG. 26B is a schematic bottom view showing the first holder, and FIG. 26C is a schematic rear view showing of the first holder.
FIG. 27 is a flowchart illustrating a method for producing grafted seedlings in an embodiment.
FIG. 28 is a schematic perspective view showing a grafting member set in an embodiment.
FIG. 29 is a schematic perspective view showing a second frame of a first grafting member in Fig. 28.

### EXPLANATION OF REFERENCE NUMERALS

1, 10, 101, 201...grafting member, 2, 12, 102, 202...scion part, 3, 13, 103, 203...rootstock part, 4, 14, 104, 204...first holder, 5, 15, 105, 205...second holder, 6, 16, 106, 206...support part, 24, 24A, 24B, 124, 224...first contact portion, 25A, 25B, 125A, 125B, 225A, 225B...first receiving surface, 34, 34A, 34B, 134...second contact portion, 35A, 35B, 135A, 135B...second receiving surface, 41, 41A, 41B, 141, 241...first press portion, 42A, 42B, 142A, 142B, 242A, 242B...first guide surface , 42C, 52C, 142C, 152C, 242C...cushioning material, 51, 51A, 51B, 151...second press portion, 52A, 52B, 152A, 152B...second guide surface.

### MODE FOR CARRYING OUT THE INVENTION

The following describes, with reference to the drawings, embodiments to which the present disclosure is applied.

### [1. First Embodiment]

### [1-1. Configuration]

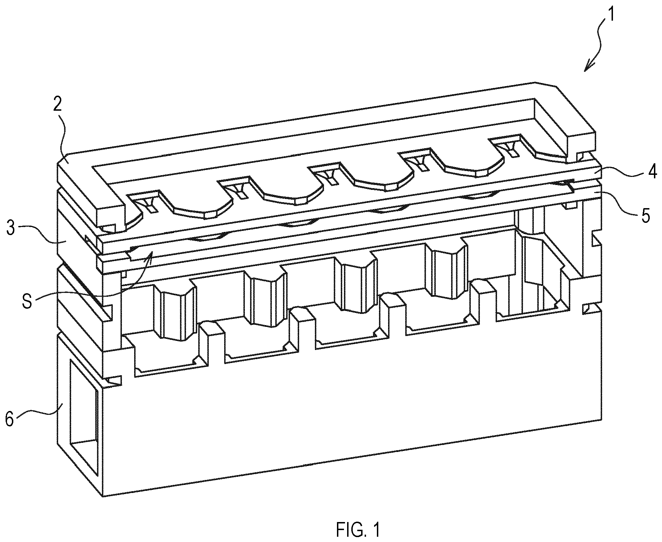

A grafting member 1 shown in FIG. 1 is a cassette type member for cutting plants and acquiring scions and rootstocks and for joining the acquired scions and rootstocks.

The grafting member 1 in FIG. 1 is configured such that the grafting member 1 can be used as a first grafting member to acquire scions and as a second grafting member to acquire rootstocks. Specifically, a grafting member set of the present embodiment comprises the grafting member 1 as the first grafting member and the grafting member 1 as the second grafting member.

The grafting member 1 as the first grafting member and the grafting member 1 as the second grafting member do not have to have exactly the same shape. In other words, the second grafting member may have a part that is shaped differently from the first grafting member.

The grafting member 1 comprises a scion part 2, a rootstock part 3, a first holder 4, a second holder 5, and a support part 6. Although FIG. 1 shows a state in which these components are assembled, each component is configured to be detachable. Each component, except magnets and cushioning materials which will be described later, may be formed of, for example, resin, metal, or other materials.

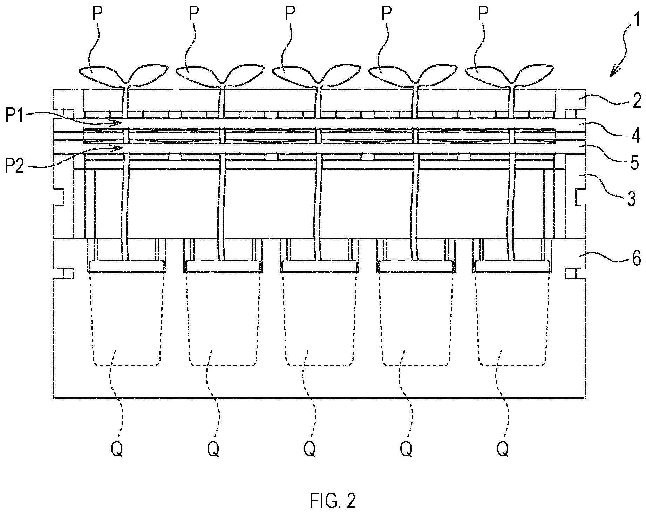

As shown in FIG. 2, the grafting member 1 is configured to be capable of retaining plants P inside thereof. Although five plants P are retained in FIG. 2, the number of the plants P retained in the grafting member 1 is not limited to five. In addition, the type of plants P is not particularly limited.

### <Scion Part>

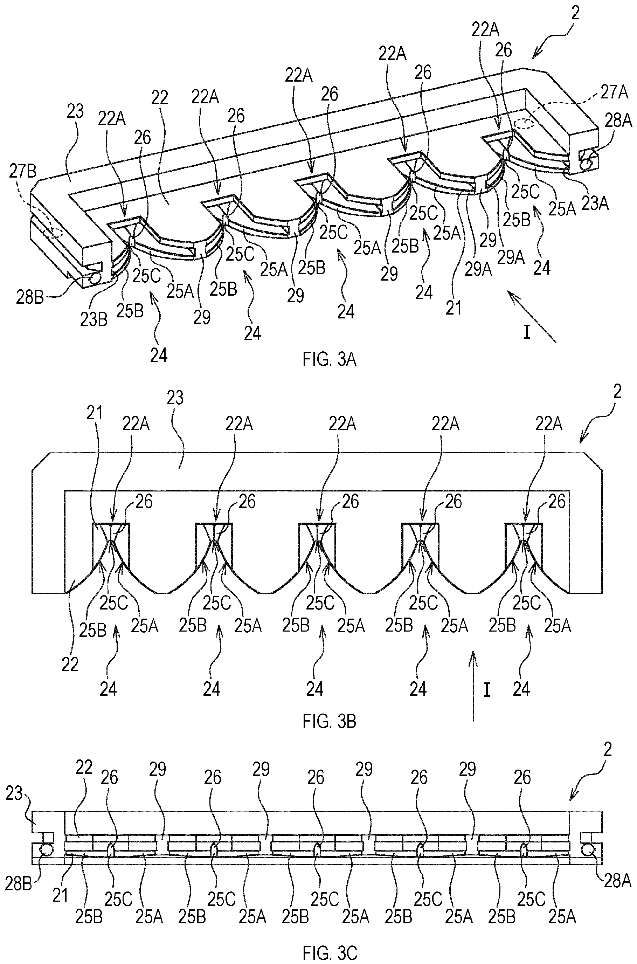

As shown in FIG. 3A, the scion part 2 has a first lower plate 21, a first upper plate 22, and a first frame 23.

The first lower plate 21 is a plate-shaped portion having a plate surface parallel to a direction I of pressing (that is, a direction of inserting) the first holder 4, which will be described later, and perpendicular to the axes of the plants P. The first lower plate 21 have first contact portions 24 that come into contact with the respective stems of the plants P at a first position P1 (see FIG. 2). The first position P1 is located close to the tips (that is, the stem tips) of the plants P as compared with a cut position of the plants P.

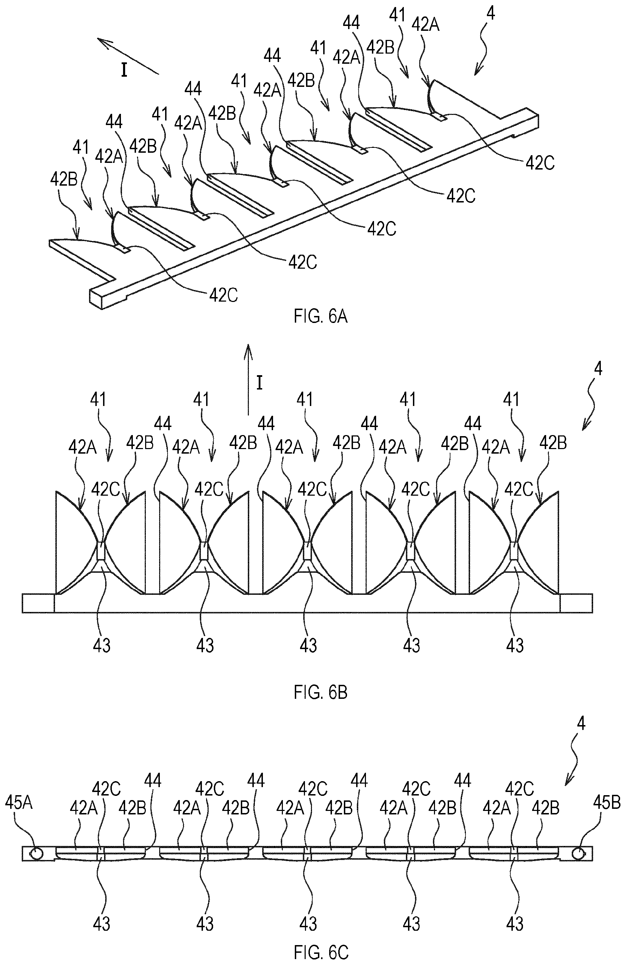

The first contact portions 24 and first press portions 41 of the first holder 4 (see FIG. 6A) interpose the stems of the plants P therebetween to secure the stems of plants P. The first contact portions 24 are recesses provided to the first lower plate 21. The first contact portions 24 are arranged in parallel in a direction intersecting the direction I of pressing the first holder 4. Each first contact portion 24 has a pair of first receiving surfaces 25A, 25B and a first protrusion 26.

The pair of first receiving surfaces 25A, 25B is provided at a position where the pair of first receiving surfaces 25A, 25B faces the first press portion 41 of the first holder 4 attached to the scion part 2, and the distance between the pair of first receiving surfaces 25A, 25B decreases along the direction I of pressing the first holder 4. In other words, the first contact portions 24 are recesses that are open to the outside of the first lower plate 21. As shown in FIG. 3B, the pair of first receiving surfaces 25A, 25B has a shape of a curved line that is bent smoothly when viewed from a direction parallel to the axis of the stem of the plant P (hereinafter also referred to as a "plant P axis direction"). The edges of the pair of first receiving surfaces 25A, 25B in the plant P axis direction are chamfered. The axes of the stems of the plants P are, for example, parallel to the vertical direction.

As shown in FIG. 3A, a first protrusion 26 is provided in a connected portion 25C of the pair of first receiving surfaces 25A, 25B (that is, in the innermost part of the first contact portion 24), and the first protrusion 26 protrudes in the plant P axis direction beyond the first receiving surfaces 25A, 25B. Specifically, the first protrusion 26 is raised from the upper surface of the first lower plate 21 in a direction toward the tip of the plant P.

As shown in FIG. 3C, the width of the first protrusions 26 when viewed in the direction I of pressing the first holder 4 decreases with the distance from the first receiving surfaces 25A, 25B (that is, toward the tips).

As shown in FIG. 3A, the first upper plate 22 is disposed in parallel to the first lower plate 21 to be spaced apart from the first lower plate 21. The first upper plate 22 is disposed close to the tips of the plants P as compared with the first lower plate 21. The first upper plate 22 has recesses 22A for insertion of the plants P. Each recess 22A is provided at a position to be aligned with the first contact portion 24 when viewed in the plant P axis direction.

The first lower plate 21 and the first upper plate 22 are coupled by the first frame 23 and columnar portions 29. Between the first lower plate 21 and the first upper plate 22, a slit-like space is formed for insertion of the first holder 4. The first frame 23 has guide grooves 23A, 23B that guide the first holder 4.

The columnar portions 29 are each disposed between adjacent first contact portions 24 (that is, between the first receiving surface 25A of one first contact portion 24 and the first receiving surface 25B of another first contact portion 24 adjacent to the former first contact portion 24). The columnar portions 29 each have guide grooves 29A that guide the first holder 4.

The first frame 23 has two first main magnets 27A, 27B that serve as a securing mechanism to detachably secure the scion part 2 and the rootstock part 3. The two first main magnets 27A, 27B are disposed where the two first main magnets 27A, 27B face and abut the rootstock part 3 (specifically, on the bottom surface of the first frame 23), and are connected to the respective second main magnets 37A, 37B of the rootstock part 3.

The first frame 23 also has two first auxiliary magnets 28A, 28B that serve as a securing mechanism to detachably secure the scion part 2 and the first holder 4. The two first auxiliary magnets 28A, 28B are disposed where the two first auxiliary magnets 28A, 28B face and abut the first holder 4 (specifically, on the lateral surfaces of the first frame 23), and are connected to the respective opposite magnets 45A, 45B of the first holder 4.

The scion part 2 of the grafting member 1 as the first grafting member is configured to be attachable, while the first holder 4 is secured thereto, to the rootstock part 3 of the grafting member 1 as the second grafting member to which the second holder 5 is secured.

### <Rootstock Part>

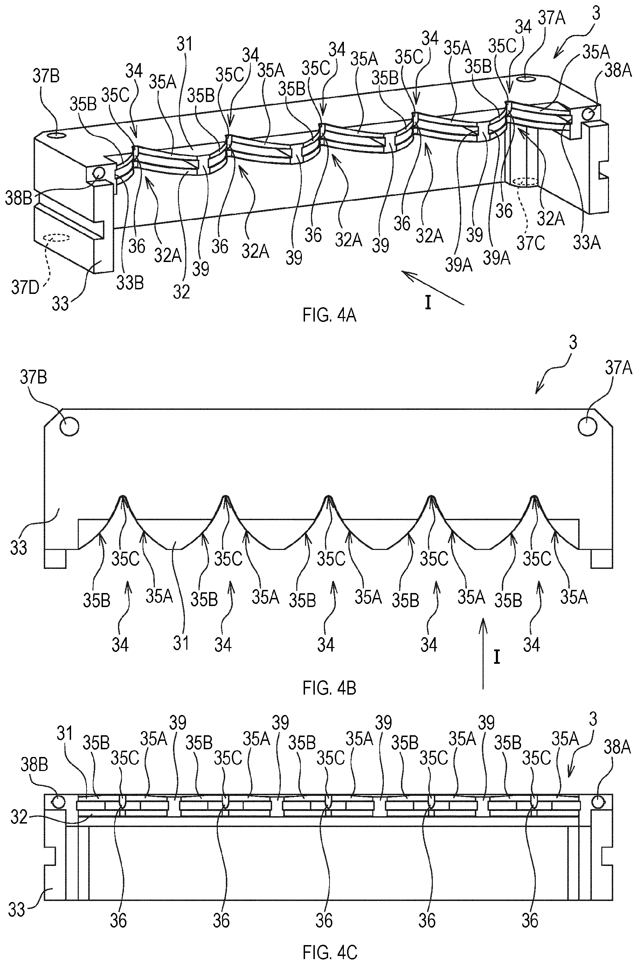

As shown in FIG. 4A, the rootstock part 3 has a second upper plate 31, a second lower plate 32, and a second frame 33.

The second upper plate 31 is a plate-shaped portion having a plate surface parallel to a direction I of pressing the second holder 5, which will be described later, and perpendicular to the axes of the stems of the plants P. The second upper plate 31 has second contact portions 34 that come into contact with the respective stems of the plants P at a second position P2 (see FIG. 2). The second position P2 is located close to the roots of the plants P as compared with the cut position of the plants P.

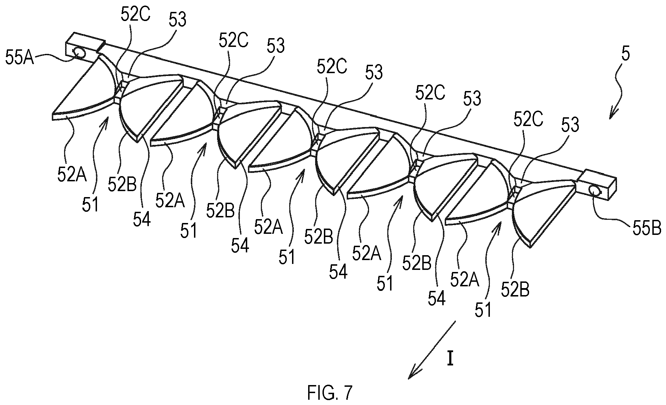

The second contact portions 34 and second press portions 51 of the second holder 5 (see FIG. 7) interpose the stems of the plants P therebetween to secure the stems of plants P. The second contact portions 34 are recesses provided to the second upper plate 31. The second contact portions 34 are arranged in parallel in a direction intersecting the direction I of pressing the second holder 5. Each second contact portion 34 has a pair of second receiving surfaces 35A, 35B and a second protrusion 36.

The pair of second receiving surfaces 35A, 35B is provided at a position where the pair of second receiving surfaces 35A, 35B faces the second press portion 51 of the second holder 5 attached to the rootstock part 3, and the distance between the pair of second receiving surfaces 35A, 35B decreases along the direction I of pressing the second holder 5. In other words, the second contact portions 34 are recesses that are open to the outside of the second upper plate 31. As shown in FIG. 4B, the pair of second receiving surfaces 35A, 35B has a shape of a curved line that is bent smoothly when viewed from the plant P axis direction. The edges of the pair of second receiving surfaces 35A, 35B in the plant P axis direction are chamfered.

As shown in FIG. 4A, a second protrusion 36 is provided in a connected portion 35C of the pair of second receiving surfaces 35A, 35B (that is, in the innermost part of the second contact portion 34), and the second protrusion 36 protrudes in the plant P axis direction beyond the second receiving surfaces 35A, 35B. Specifically, the second protrusion 36 is raised from the bottom surface of the second upper plate 31 in a direction toward the tip of the plant P.

As shown in FIG. 4C, the width of the second protrusions 36 when viewed in the direction I of pressing the second holder 5 decreases with an increase in distance from the second receiving surfaces 35A, 35B (that is, toward the tips).

Each second contact portion 34 is arranged at a position to be aligned with the corresponding first contact portion 24 while the scion part 2 and the rootstock part 3 are secured. In the present embodiment, the second contact portions 34 have a shape of the first contact portions 24 inverted in the plant P axis direction. In other words, the second contact portions 34 are identical to the first contact portions 24 except that the orientation of the first protrusions 26 is inversed. The second contact portions 34 and the first contact portions 24, thus, have the same shape in a planar view (specifically, when viewed in the plant P axis direction). However, the shape of the second contact portions 34 and the first contact portions 24 in a planar view may be different, and the second protrusion 36 of the second contact portion 34 and the first protrusion 26 of the first contact portion 24 may be raised in the same direction.

As shown in FIG. 4A, the second lower plate 32 is disposed in parallel to the second upper plate 31 to be spaced apart from the second upper plate 31. The second lower plate 32 is disposed close to the roots of the plants P as compared with the second upper plate 31. The second lower plate 32 has recesses 32A for insertion of the plants P. Each recess 32A is provided at a position to be aligned with the second contact portion 34 when viewed in the plant P axis direction.

The second upper plate 31 and the second lower plate 32 are coupled by the second frame 33 and columnar portions 39. Between the second upper plate 31 and the second lower plate 32, a slit-like space is formed for insertion of the second holder 5. The second frame 33 has guide grooves 33A, 33B that guide the second holder 5.

The columnar portions 39 are each disposed between adjacent second contact portions 34 (that is, between the second receiving surface 35A of one second contact portion 34 and the second receiving surface 35B of another second contact portion 34 adjacent to the former second contact portion 34). The columnar portions 39 each have guide grooves 39A that guide the second holder 5.

The second frame 33 supports the scion part 2. The second frame 33 has four second main magnets 37A, 37B, 37C, 37D that serve as a securing mechanism to detachably secure the scion part 2 and the support part 6, which will be described later, to the rootstock part 3.

The two second main magnets 37A, 37B are disposed where the two second main magnets 37A, 37B face and abut the scion part 2 (specifically, the upper surface of the second frame 33), and are connected to the respective first main magnets 27A, 27B of the scion part 2. The remaining two second main magnets 37C, 37D are disposed where the two second main magnets 37C, 37D face and abut the support part 6 (specifically, on the bottom surface of the second frame 33), and are connected to the respective third main magnets 63A, 63B of the support part 6.

The second frame 33 also has two second auxiliary magnets 38A, 38B that serve as a securing mechanism to detachably secure the second holder 5 to the rootstock part 3. The two second auxiliary magnets 38A, 38B are disposed where the two second auxiliary magnets 38A, 38B face and abut the second holder 5 (specifically, the lateral surfaces of the second frame 33), and are connected to the respective opposite magnets 55A, 55B of the second holder 5.

It is preferable that the two first auxiliary magnets 28A, 28B of the scion unit 2 are arranged in a manner so that the magnetic poles thereof are different from those of the two second auxiliary magnets 38A, 38B of the rootstock unit 3 stacked in the up-down direction. For example, it is preferable that the south pole of the second auxiliary magnet 38A is arranged in relation to the north pole of the first auxiliary magnet 28A, and north pole of the second auxiliary magnet 38B is arranged in relation to the south pole of the first auxiliary magnet 28A. This arrangement inhibits removal of the scion part 2 from the rootstock part 3 due to repulsion of magnets.

### <First Holder>

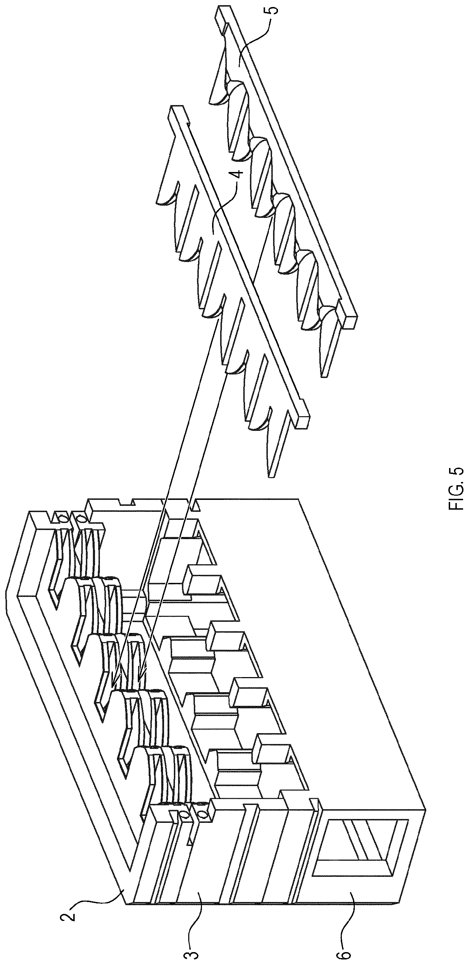

As shown in FIG. 5, the first holder 4 is a plate-shaped member configured such that it can be secured to the scion part 2. In the present embodiment, the first holder 4 is inserted in the horizontal direction between the first lower plate 21 and the first upper plate 22 of the scion part 2. Accordingly, the first holder 4 is secured to the scion part 2.

As shown in FIG. 6A, the first holder 4 has the first press portions 41 that press the respective stems of the plants P against first contact portions 24 of the scion part 2. The first press portions 41 are arranged at positions where the first press portions 41 face the first contact portions 24 in the direction I of pressing the first holder 4.

The first press portions 41 correspond to recesses forming a portion with a comb teeth shape in the first holder 4, and are arranged in parallel in a direction intersecting the direction I of pressing the first holder 4. Each first press portion 41 has a pair of first guide surfaces 42A, 42B and a cushioning material 42C.

The pair of first guide surfaces 42A, 42B is provided at a position where the pair of first guide surfaces 42A, 42B faces the first contact portion 24 of the scion part 2, and the distance between the pair of first guide surfaces 42A, 42B increases along the direction I of pressing the first holder 4. In other words, the first press portions 41 are recesses that are open to the outside of the first holder 4. As shown in FIG. 6B, the pair of first guide surfaces 42A, 42B has a shape of a curved line that is bent smoothly when viewed from the plant P axis direction. The edges of the pair of first guide surfaces 42A, 42B in the plant P axis direction are chamfered.

The cushioning material 42C is disposed in a connected portion of the pair of first guide surfaces 42A, 42B (that is, in the innermost part of the first press portion 41). The cushioning material 42C is made of a material that can be deformed to a certain extent by contact of the stem of the plant P. Examples of the material forming the cushioning material 42C include porous materials such as sponges. Elastic materials, such as rubber, may be also used for the material forming the cushioning material 42C.

The stem of the plant P placed in the first contact portion 24 is brought into contact with the cushioning material 42C of the first press portion 41 and the first protrusion 26 of the first contact portion 24. The stem of the plant P is retained between the first contact portion 24 and the first press portion 41, thus being inhibited from moving in the direction of the diameter of the stem.

As shown in FIGS. 6B and 6C, the first holder 4 has bulging portions 43 that are in contact with the cushioning materials 42C and bulge out in the plant P axis direction beyond the first press portion 41. The first holder 4 is inserted into the scion part 2 such that the surface provided with the bulging portions 43 faces toward the roots of the plants P (specifically, becomes the bottom surface).

The first holder 4 has slits 44 provided between the first press portions 41. When the first holder 4 is inserted into the scion part 2, each columnar portion 29 of the scion part 2 is inserted into each slit 44.

The first holder 4 also has two magnets 45A, 45B that serve as a securing mechanism to detachably secure the first holder 4 to the scion part 2. The two magnets 45A, 45B are disposed where the magnets 45A, 45B face and abut the first frame 23, and are connected to the respective opposite first auxiliary magnets 28A, 28B of the first frame 23.

### <Second Holder>

As shown in FIG. 5, the second holder 5 is a plate-shaped member configured such that it can be secured to the rootstock part 3. In the present embodiment, the second holder 5 is inserted in the horizontal direction between the second upper plate 31 and the second lower plate 32 of the rootstock part 3. Accordingly, the second holder 5 is secured to the rootstock part 3.

As shown in FIG. 7, the second holder 5 has the second press portions 51 that press the respective stems of the plants P against the second contact portions 34 of the rootstock part 3. The second press portions 51 are arranged at positions where the second press portions 51 face the second contact portions 34 in the direction I of pressing the second holder 5.

Each second press portion 51 has a pair of second guide surfaces 52A, 52B and a cushioning material 52C. The pair of second guide surfaces 52A, 52B is provided at a position where the pair of second guide surfaces 52A, 52B faces the second contact portion 34 of the rootstock part 3, and the distance between the pair of second guide surfaces 52A, 52B increases along the direction I of pressing the second holder 5. In other words, the second press portions 51 are recesses that are open to the outside of the second holder 5. The pair of second guide surfaces 52A, 52B has a shape of a curved line that is bent smoothly when viewed from the plant P axis direction.

The cushioning materials 52C are identical to the cushioning materials 42C of the first press portions 41 of the first holder 4; the description of which, thus, will be omitted.

In the present embodiment, the second holder 5 is a mirror image of the first holder 4 with respect to a plane perpendicular to axes of the stems of the plants P (specifically, a horizontal plane). In other words, the second holder 5 is a vertical inversion of the first holder 4. The second holder 5, however, may have a portion partly different from the first holder 4.

The second holder 5 has bulging portions 53, slits 54, and the two magnets 55A, 55B. The bulging portions 53 and the slits 54 are identical to the bulging portions 43 and the slits 44 of the first holder 4; the description of which, thus, will be omitted. The second holder 5 is inserted into the rootstock part 3 such that the surface provided with the bulging portions 53 faces toward the tips of the plants P (specifically, becomes the upper surface).

The two magnets 55A, 55B are a securing mechanism to detachably secure the second holder 5 to the rootstock part 3. The two magnets 55A, 55B are disposed where the magnets 55A, 55B face and abut the second frame 33 of the rootstock part 3, and are connected to the respective opposite second auxiliary magnets 38A, 38B of the second frame 33.

As shown in FIG. 1, a space S is provided between the first holder 4, secured to the scion part 2, and the second holder 5, secured to the rootstock part 3, to expose the stems of the plants P. In other words, the first holder 4 and the second holder 5, by being respectively secured to the scion part 2 and the rootstock part 3, provide the space S to expose the stems of the plants P between the first position P1 and the second position P2. The stems are cut in the space S to acquire scions and rootstocks of the plants P.

### <Support Part>

As shown in FIG. 2, the support part 6 supports pods Q in which the roots of the plants P are contained.

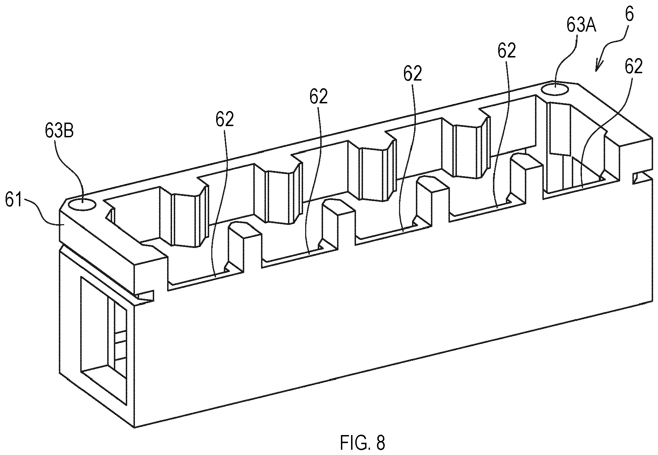

As shown in FIG. 8, the support part 6 has a body 61, support frames 62, and two third main magnets 63A, 63B. In the present embodiment, the support part 6 is configured to be detachable from the rootstock part 3.

The body 61 is provided with an internal space into which the pods Q can be inserted. The support frames 62 catch the respective pods Q in the vertical direction and protrude inward from the inner wall of the body 61.

The two third main magnets 63A, 63B are disposed where the two third main magnets 63A, 63B face and abut the rootstock part 3 (specifically, the upper surface of the body 61), and are connected to the respective second main magnets 37C, 37D of the rootstock part 3.

### [1-2. Effects]

The embodiments described hereinabove in detail achieve the following effects.
(1a) The first contact portions 24 and the first press portions 41, and the second contact portions 34 and the second press portions 51 enable securing of the stems of the plants P respectively in the scion part 2 and the rootstock part 3 at two positions, namely at the upper position and the lower position, in the vicinity of cut sections. Accordingly, the positional accuracy of the stems to be joined is improved. As a result, grafting accuracy is improved.
(1b) Since already-grown plants P are used, it is possible to avoid losses that may be generated, for example, due to barren individuals in a case where seeds are germinated inside the member. It is also possible to avoid the inside of the member being damaged due to growing roots, and avoid the plants P being damaged when the roots, biting into the member, are removed from the member. In addition, it is possible to easily and reliably acquire rootstocks with a certain length of hypocotyls. As a result, productivity of grafted seedlings can be improved.
(1c) Since the size of the member can be easily changed in accordance with the size of the plants P, it is possible to graft various types of plants. Moreover, since one type of the grafting member 1 can be used for both scions and rootstocks, the equipment cost can be reduced.
(1d) The distance between the pair of first receiving surfaces 25A, 25B and the distance between the pair of second receiving surfaces 35A, 35B decrease along the direction of pressing the holders, while the distance between the pair of first guide surfaces 42A, 42B and the distance between the pair of second guide surfaces 52A, 52B increase along the direction of pressing the holders. Accordingly, by insertion of the first holder 4 and the second holder 5, the stems of the plants P can be easily and accurately guided to and secured at specified positions.
(1e) The width of the first protrusions 26 and the width of the second protrusions 36 viewed from the direction of pressing the holders decrease with an increase in distance respectively from the pair of first receiving surfaces 25A, 25B and the second receiving surfaces 35A, 35B. Accordingly, the stems can be easily guided to securing positions between the first contact portions 24 and the first press portions 41, and between the second contact portions 34 and the second press portions 51.
(If) Each pair of first receiving surfaces 25A, 25B, first guide surfaces 42A, 42B, second receiving surfaces 35A, 35B, and second guide surfaces 52A, 52B has the shape of a curved line that is bent when viewed from the plant P axis direction. Accordingly, it is possible to inhibit the stems from being damaged when the first holder 4 and the second holder 5 are inserted to guide the stems to the specified positions.
(1g) Since the first press portions 41 and the second press portions 51 respectively have the cushioning materials 42C, 52C, it is possible to secure the stems at the specified positions while the difference in diameter of the stems is absorbed by the cushioning materials 42C, 52C.
(1h) Due to the securing mechanisms made up of the first main magnets 27A, 27B and the second main magnets 37A, 37B, rootstocks and scions after joining can be pressed against each other. As a result, it is possible to inhibit separation between the rootstocks and the scions during healing or during transportation.
(1i) Due to the support part 6 that supports the pods Q with the roots of the plants P contained therein, the plants P can be stably retained during a period before cutting and after joining.

### [2. Second Embodiment]

### [2-1. Configuration]

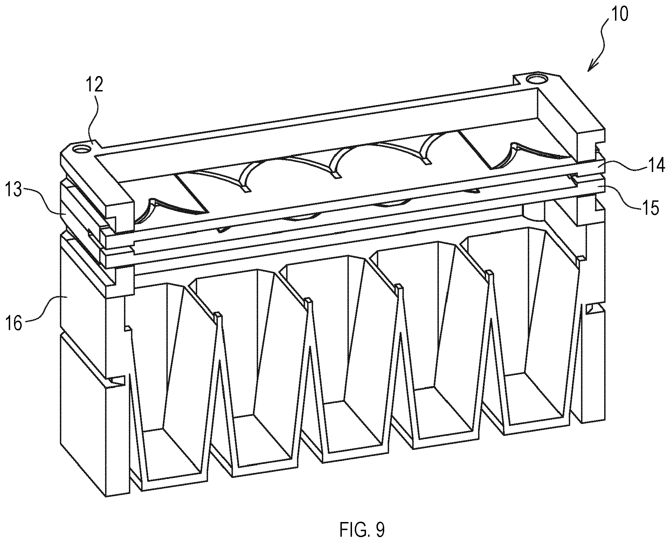

Similarly to the grafting member 1, a grafting member 10 shown in FIG. 9 is configured such that the grafting member 10 can be used as the first grafting member so as to acquire scions and also as the second grafting member so as to acquire rootstocks.

The grafting member 10 comprises a scion part 12, a rootstock part 13, a first holder 14, a second holder 15, and a support part 16. FIG. 9 shows an assembled state of these components; each of the components however is configured to be detachable. Each component, except magnets and cushioning materials which will be described later, may be formed of, for example, resin, metal, or other materials.

### <Scion Part>

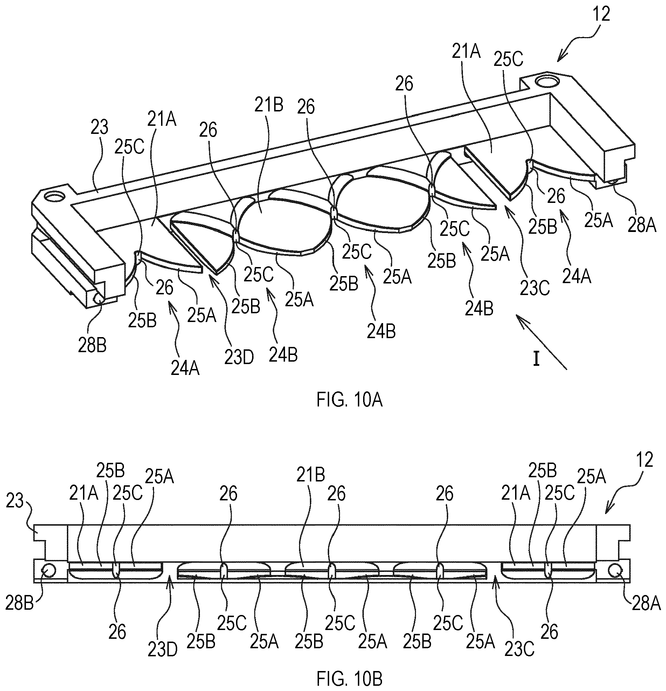

As shown in FIGS. 10A and 10B, the scion part 12 has two first plates 21A, one second plate 21B, and a first frame 23.

The first plates 21A and the second plate 21B are plate-shaped portions, each having a plate surface parallel to a direction I of pressing the first holder 14, which will be described later. The first plates 21A and the second plate 21B are arranged in parallel in a direction intersecting the direction I of pressing stems of plants P. The second plate 21B is interposed between the two first plates 21A. The two first plates 21A are each provided with a downward-facing first contact portion 24A. The second plate 21B is provided with upward-facing first contact portions 24B.

The first contact portions 24A, 24B are identical to the first contact portions 24 of the scion part 2 in FIG. 3A. Specifically, each of the first contact portions 24A, 24B has a pair of first receiving surfaces 25A, 25B and a first protrusion 26 provided in a connected portion 25C of the pair of first receiving surfaces 25A, 25B.

In the present embodiment, the first protrusions 26 of the downward-facing first contact portion 24A provided to the first plates 21A are raised from the bottom surfaces of the first plates 21A (that is, from the plate surfaces on the rootstock part 13 side) in a direction toward the roots of the plants P.

The first protrusions 26 of the upward-facing first contact portion 24B, interposed between the two downward-facing first contact portions 24A, are raised from the upper surface of the second plate 21B (that is, from the plate surface on the opposite side of the rootstock part 13 side) in a direction toward the tips of the plants P.

As described above, the scion part 12 has the downward-facing first contact portions 24A and the upward-facing first contact portion 24B with the respective first protrusions 26 protruding in directions different from each other. The downward-facing first contact portions 24A do not have to be arranged at both ends of the scion part 12. Moreover, the scion part 12 may have one downward-facing first contact portion 24A. Similarly, the scion part 12 may have one upward-facing first contact portion 24B.

As shown in FIG. 10B, the lower surfaces of the first plates 21A are arranged at the same position as that of the upper surface of the second plate 21B in the plant P axis direction, or at a position close to the tips of the plants P compared with the upper surface of the second plate 21B. In other words, the second plate 21B is displaced relative to the first plates 21A in a direction parallel to the stems of the plants P.

Between the two first plates 21A and the second plate 21B, respective slits 23C, 23D are formed to guide insertion of the first holder 14.

Similarly to the first frame 23 of the scion part 2 in FIG. 3A, the first frame 23 has two first main magnets (not shown) that serve as a securing mechanism to detachably secure the scion part 12 and the rootstock part 13, and two first auxiliary magnet 28A, 28B that serve as a securing mechanism to detachably secure the first holder 14 to the scion part 12.

### <Rootstock Part>

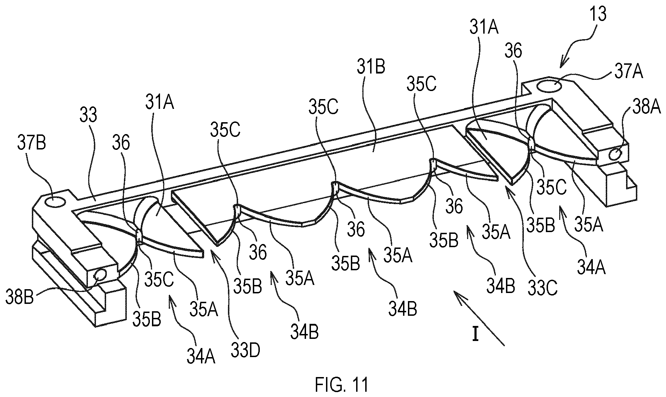

As shown in FIG. 11, the rootstock part 13 has two first plates 31A, one second plate 31B, and a second frame 33.

The first plates 31A and the second plate 31B are plate-shaped portions, each having a plate surface parallel to a direction I of pressing the second holder 15, which will be described later. The first plates 31A and the second plate 31B are arranged in parallel in a direction intersecting the direction I of pressing the stems of the plants P. The second plate 31B is interposed between the two first plates 31A. The two first plates 31A are each provided with one upward-facing second contact portion 34A. The second plate 31B is provided with downward-facing second contact portions 34B.

The second contact portions 34A, 34B are identical to the second contact portions 34 of the scion part 2 in FIG. 4A. Specifically, each of the second contact portions 34A, 34B has a pair of second receiving surfaces 35A, 35B and a second protrusion 36 provided in a connected portion 35C of the pair of second receiving surfaces 35A, 35B.

In the present embodiment, the second protrusion 36 of the upward-facing second contact portion 34A provided to the first plate 31A is raised from the upper surface of the first plate 31A (that is, the plate surface on the scion part 12 side) in a direction toward the tip of the plant P.

The second protrusions 36 of the downward-facing second contact portions 34B are raised from the bottom surface of the second plate 31B (that is, from the plate surface on the opposite side of the scion part 12 side) in a direction toward the roots of the plant P.

The second plate 31B is displaced relative to the first plates 31A in a direction parallel to the stems of the plants P. Between the two first plates 31A and the second plate 31B, respective slits 33C, 33D are formed to guide insertion of the second holder 15.

Similarly to the second frame 33 of the rootstock part 3 in FIG. 4A, the second frame 33 has two second main magnets 37A, 37B that serve as a securing mechanism to detachably secure the scion part 12 to the rootstock part 13, magnets (not shown) that detachably secure the support part 16, which will be described later, and two second auxiliary magnets 38A, 38B that serve as a securing mechanism to detachably secure the second holder 15 to the rootstock part 13.

As described above, the rootstock part 13 is a mirror image of the scion part 12 with respect to a plane perpendicular to axes of the stems of the plants P (specifically, a horizontal plane). Specifically, the rootstock part 13 is a vertical inversion of the scion part 12 with magnets attached thereto in order to detachably secure the support part 16.

### <First Holder>

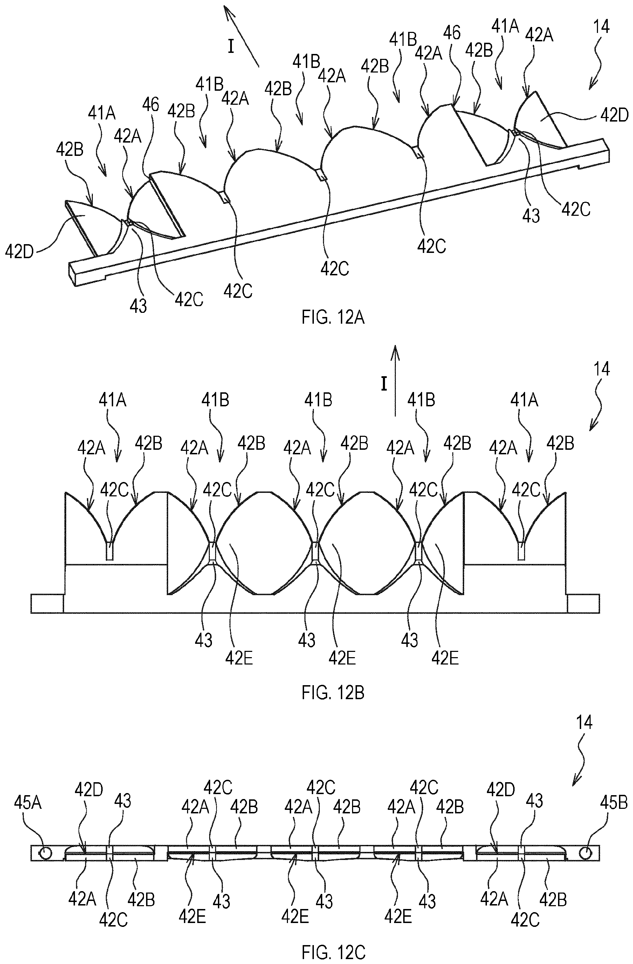

As shown in FIG. 12A, the first holder 14 is a plate-shaped member configured such that it can be secured to the scion part 12. The first holder 14 has two upward-facing first press portion 41A and multiple downward-facing first press portions 41B that press the stems of the plants P against the respective first contact portions 24A, 24B of the scion part 12, and also has bulging portions 43.

The two upward-facing first press portions 41A are arranged at both ends in a direction intersecting the direction I of pressing. The downward-facing first press portions 41B are interposed between the two upward-facing first press portions 41A.

The first press portions 41A, 41B are arranged in parallel in a direction intersecting the direction I of pressing the first holder 14. Each of the first press portions 41A, 41B has a pair of first guide surfaces 42A, 42B and a cushioning material 42C.

The pair of first guide surfaces 42A, 42B, the cushioning materials 42C, and the bulging portions 43 are identical to the first guide surfaces 42A, 42B, the cushioning materials 42C, and the bulging portions 43 of the first holder 4 in FIGS. 6A, 6B.

In the present embodiment, the bulging portions 43 of the upward-facing first press portions 41A are raised in a direction toward the tips of the plants P. The upward-facing first press portions 41A are configured to be stacked from below with the downward-facing first contact portions 24A provided at both ends of the scion part 12.

The bulging portions 43 of the upward-facing first press portions 41A come into contact with the receiving surfaces 25A, 25B of the downward-facing first contact portions 24A when the first holder 14 is inserted into the scion part 12. Moreover, the upper surfaces 42D (that is, the plate surfaces toward the tips of the plants P) of the upward-facing first press portions 41A are parallel to the lower surfaces of the first plates 21A of the scion part 12 and contact the lower surfaces of the first plates 21A.

The bulging portion 43 of the downward-facing first press portion 41B is raised in a direction toward the roots of the plant P. The downward-facing first press portions 41B are configured to be stacked from above with the upward-facing first contact portions 24B of the scion part 12.

The bulging portions 43 of the downward-facing first press portions 41B come into contact with the receiving surfaces 25A, 25B of the upward-facing first contact portions 24B when the first holder 14 is inserted into the scion part 12. Moreover, the lower surfaces 42E (that is, the plate surfaces toward the roots of the plants P) of the downward-facing first press portions 41B are parallel to the upper surface of the second plate 21B of the scion part 12 and contact the upper surface of the second plate 21B.

As described above, the first holder 14 has the upward-facing first press portions 41A and the downward-facing first press portions 41B with the respective bulging portions 43 protruding in directions different from each other. Accordingly, the first holder 14 is secured to the scion part 12 by the engagement between the upward-facing first press portions 41A and the downward-facing first contact portions 24A and the engagement between the downward-facing first press portions 41B and the upward-facing first contact portions 24B.

The first holder 14 has contact surfaces 46 that guide insertion of the first holder 14 into the scion part 12. The contact surfaces 46 are each provided between the upward-facing first press portion 41A and the downward-facing first press portion 41B. The contact surfaces 46 are parallel to the direction I of pressing the first holder 14 and perpendicular to the upper surfaces 42D of the upward-facing first press portions 41A. The contact surfaces 46 contact the inner surfaces of slits 23C, 23D of the scion part 12.

Similarly to the first holder 4 in FIGS. 6A, 6B, and 6C, the first holder 14 also has two magnets 45A, 45B that serve as a securing mechanism to detachably secure the first holder 14 to the scion part 12.

### <Second Holder>

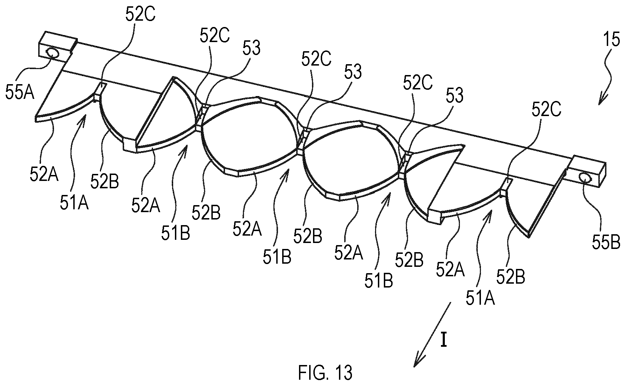

As shown in FIG. 13, the second holder 15 is a plate-shaped member configured such that it can be secured to the rootstock part 13. The second holder 15 has downward-facing second press portions 51A and upward-facing second press portions 51B that press the stems of the plants P against the respective second contact portions 34 of the rootstock part 13, and also has bulging portions 53.

The second press portions 51A, 51B are arranged in parallel in a direction intersecting the direction I of pressing the second holder 15. Each of the second press portions 51A, 51B has a pair of second guide surfaces 52A, 52B and a cushioning material 52C.

The pair of second guide surfaces 52A, 52B, the cushioning materials 52C, and the bulging portions 53 are identical to the second guide surfaces 52A, 52B, the cushioning materials 52C, and the bulging portions 53 of the second holder 5 in FIG. 7.

In the present embodiment, the second holder 15 is a mirror image of the first holder 14 with respect to a plane perpendicular to axes of the stems of the plants P (specifically, a horizontal plane). In other words, the second holder 15 is a vertical inversion of the first holder 14. The second holder 15, however, may have a portion partly different from the first holder 14.

The second holder 15 is secured to the rootstock part 13 by the engagement between the downward-facing second press portions 51A and the upward-facing second contact portions 34A and the engagement between the upward-facing second press portions 51B and the downward-facing second contact portions 34B.

Similarly to the second holder 5 in FIG. 7, the second holder 15 also has two magnets 55A, 55B that serve as a securing mechanism to detachably secure the second holder 15 to the rootstock part 13.

### <Support Part>

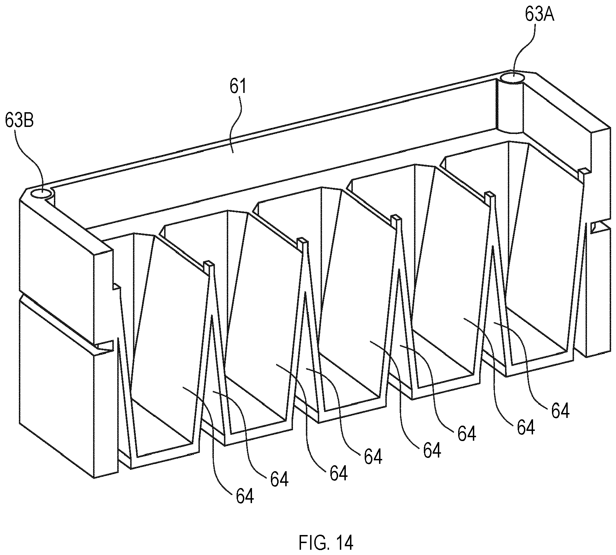

As shown in FIG. 14, the support part 16 has a body 61, partitions 64, and two third main magnets 63A, 63B. In the present embodiment, the support part 16 is configured to be detachable from the rootstock part 13.

The body 61 is provided, by the partitions 64, with internal spaces into which the pods of the plants P can be inserted. The two third main magnets 63A, 63B are disposed where the two third main magnets 63A, 63B face and abut the rootstock part 13 (specifically, on the upper surface of the body 61), and are connected to the respective opposite second main magnets of the rootstock part 13.

### [2-2. Effects]

The embodiments described hereinabove in detail achieve the following effects.
(2a) Due to the rootstock part 13 having a shape that is a mirror image of the scion part 12 with respect to a plane perpendicular to the axes of the stems of the plants P, the same constituent member can be used for both the scion part 12 and the rootstock part 13. This allows use of the same constituent member for both the first holder 4 and the second holder 5. As a result, the cost of the grafting member 10 can be reduced.
(2b) By having the first holder 14 and the second holder 15 engaged respectively with the first plates and the second plates of the scion part 12 and those of the rootstock part 13, it is possible to secure the first holder and the second holder without providing securing members for the holders (for example, the first upper plate 22 and the second lower plate 32 in the first embodiment). As a result, the cost of the grafting member 10 can be reduced.

### [3. Third Embodiment]

### [3-1. Configuration]

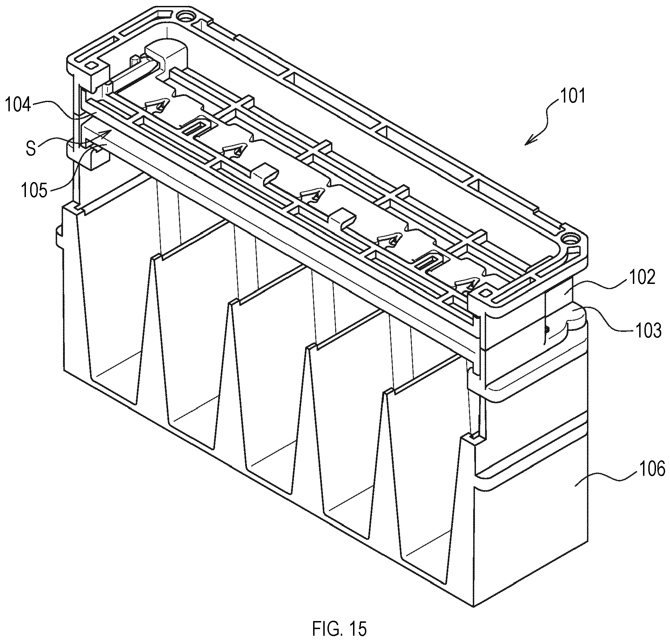

A grafting member 101 shown in FIG. 15 is a cassette type member for cutting plants and acquiring scions and rootstocks and for joining the acquired scions and rootstocks.

The grafting member 101 shown in FIG. 15 is configured such that the grafting member 101 can be used as the first grafting member so as to acquire the scions and also as the second grafting member so as to acquire the rootstocks. Specifically, the grafting member set of the present embodiment comprises the grafting member 101 as the first grafting member and the grafting member 101 as the second grafting member.

The grafting member 101 as the first grafting member and the grafting member 101 as the second grafting member do not have to have exactly the same shape. In other words, the second grafting member may have a part that is shaped differently from the first grafting member.

The grafting member 101 comprises a scion part 102, a rootstock part 103, a first holder 104, a second holder 105, and a support part 106. Although FIG. 15 shows an assembled state of these components, each of the components is configured to be detachable. Each component, except cushioning materials which will be described later, may be formed of, for example, resin, metal, or other materials.

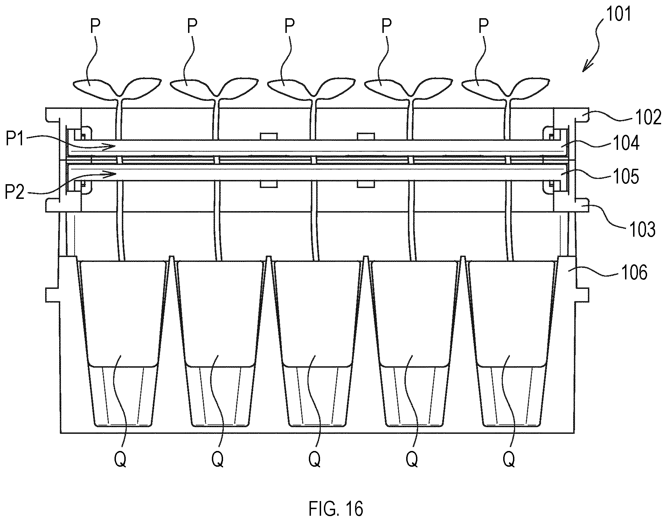

As shown in FIG. 16, the grafting member 101 is configured to be capable of retaining the plants P inside thereof. Although five plants P are retained in FIG. 16, the number of the plants P retained in the grafting member 101 is not limited to five. In addition, the type of plants P is not particularly limited.

### <Scion Part>

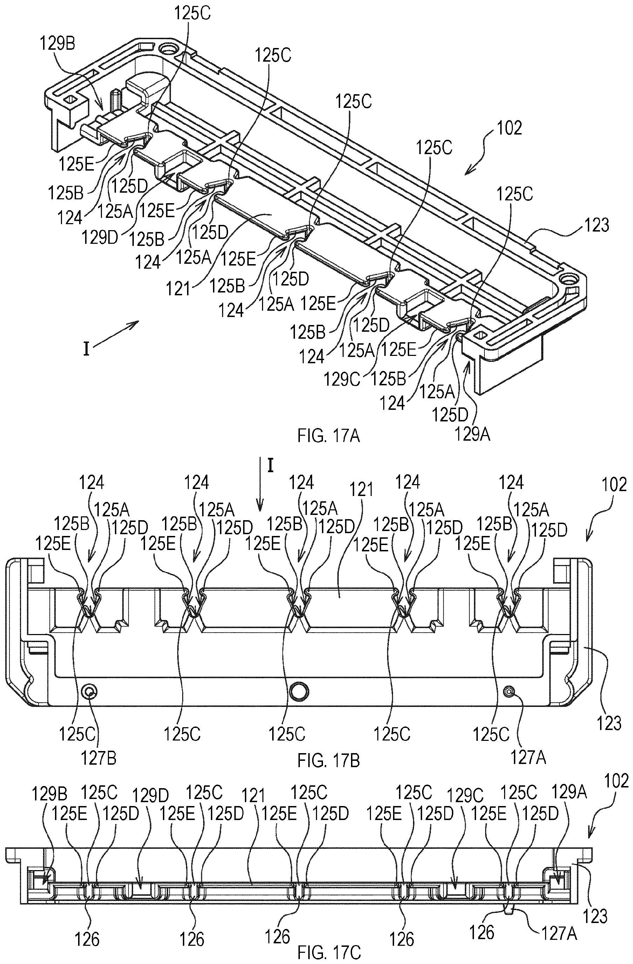

As shown in FIG. 17, the scion part 102 has a first plate 121 and a first frame 123 supporting the first plate 121.

The first plate 121 is a plate-shaped portion having a plate surface parallel to a direction I of pressing (that is, a direction of inserting) the first holder 104, which will be described later, and perpendicular to the axes of the stems of the plants P. The first plate 121 has first contact portions 124 that come into contact with the respective stems of the plants P at a first position P1 (see FIG. 16). The first position P1 is located close to the tips (that is, the stem tips) of the plants P as compared with a cut position of the plants P.

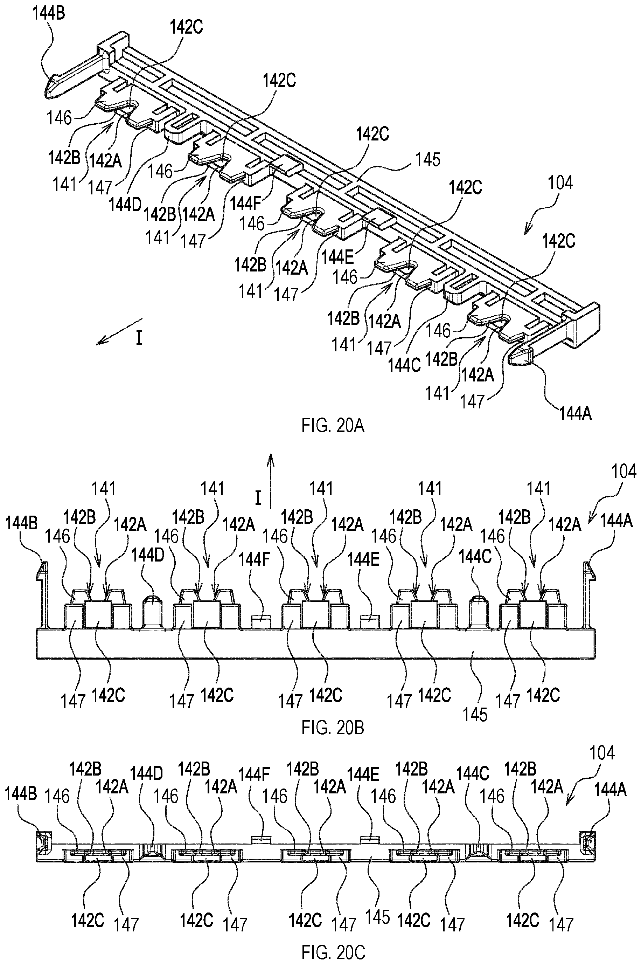

The first contact portions 124 and first press portions 141 of the first holder 104 (see FIG. 20A) interpose the stems of the plants P therebetween to secure the stems of plants P. The first contact portions 124 are notches provided to the first plate 121. The first contact portions 124 are arranged in parallel in a direction intersecting the direction I of pressing the first holder 104. Each first contact portion 124 has a pair of first receiving surfaces 125A, 125B, a pair of first gates 125D, 125E, and a first protrusion 126 (see FIG. 17C).

The pair of first receiving surfaces 125A, 125B are provided at a position where the pair of first receiving surfaces 125A, 125B faces the first press portion 141 of the first holder 104 attached to the scion part 102, and the distance between the pair of first receiving surfaces 125A, 125B decreases along the direction I of pressing the first holder 104.

As shown in FIG. 17B, the pair of first receiving surfaces 125A, 125B have a shape of a curved line that is bent smoothly when viewed from a direction parallel to the axis of the stem of the plant P (hereinafter also referred to as a "plant P axis direction"). The edges of the pair of first receiving surfaces 125A, 125B in the plant P axis direction are chamfered. The axes of the stems of the plants P are, for example, parallel to the vertical direction.

The pair of first gates 125D, 125E is arranged at the opening of a notch that forms the first contact portion 124 (that is, outside the corresponding pair of first receiving surfaces 125A, 125B). The pair of first gates 125D, 125E protrudes in directions opposing to each other. The first gates 125D, 125E inhibit the plant P placed in the first contact portion 124 from moving out of the first contact portion 124 before the first holder 104 is secured.

The first contact portion 124 does not have to have the pair of first gates 125D, 125E. In other words, the first receiving surfaces 125A, 125B may reach the end face of the first plate 121.

As shown in FIG. 17C, the first protrusion 126 is provided in a connected portion 125C of the pair of first receiving surfaces 125A, 125B (that is, in the innermost part of the first contact portion 124), and the first protrusion 126 protrudes in the plant P axis direction beyond the first receiving surfaces 125A, 125B. Specifically, the first protrusion 126 protrudes from the bottom surface of the first plate 121 in a direction toward the roots of the plant P. The leading end of the first protrusion 126 is curved like an arc.

As shown in FIG. 17B, the first protrusion 126 has a curved surface depressed in an arc-shape in the direction I of pressing when viewed in the plant P axis direction. The stem of the plant P placed in the first contact portion 124 is pressed against the curved surface.

As shown in FIG. 17A, the scion part 102 has two slits 129A, 129B and two grooves 129C, 129D to secure the first holder 104. The slits 129A, 129B are each provided between the first plate 121 and the first frame 123 and extend in parallel to the direction I of pressing. The grooves 129C, 129D are each formed by a part of the first plate 121 being depressed in the thickness direction and extend in parallel to the direction I of pressing.

As shown in 17B, the first frame 123 has a pin 127A and a hole 127B that serve as a securing mechanism to detachably secure the scion part 102 and the rootstock part 103. The pin 127A and the hole 127B are arranged where the pin 127A and the hole 127B face and abut the rootstock part 103 (specifically, on the bottom surface of the first frame 123), and respectively mate with a hole 137B and a pin 137A of the rootstock part 103.

The scion part 102 of the grafting member 101 as the first grafting member is configured to be attachable, while the first holder 104 is secured thereto, to the rootstock part 103 of the grafting member 101 as the second grafting member to which the second holder 105 is secured.

### <Rootstock Part>

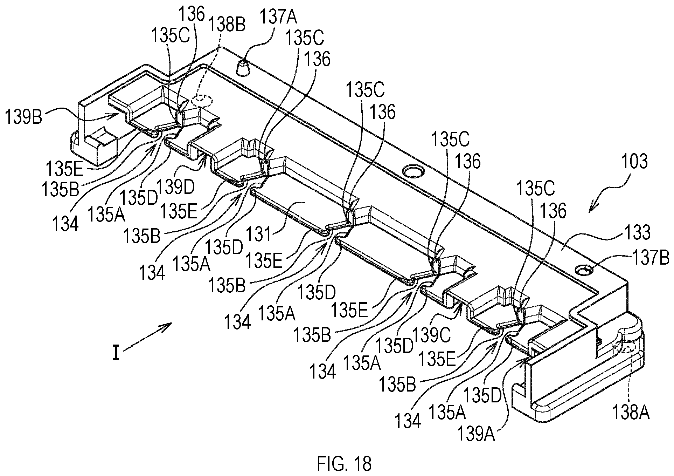

As shown in FIG. 18, the rootstock part 103 has a second plate 131 and a second frame 133 supporting the second plate 131.

The second plate 131 is a plate-shaped portion having a plate surface parallel to a direction I of pressing the second holder 105, which will be described later, and perpendicular to the axes of the stems of the plants P. The second plate 131 has second contact portions 134 that come into contact with the respective stems of the plants P at a second position P2 (see FIG. 16). The second position P2 is located close to the roots of the plants P as compared with the cut position of the plants P.

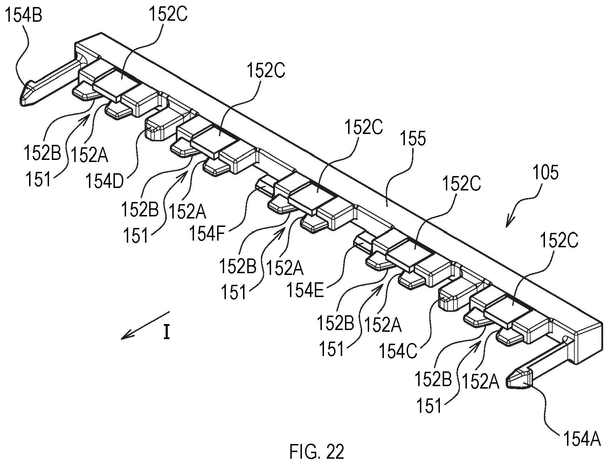

The second contact portions 134 and second press portions 151 of the second holder 105 (see FIG. 22) interpose the stems of the plants P therebetween to secure the stems of plants P. The second contact portions 134 are arranged in parallel in a direction intersecting the direction I of pressing the second holder 105. Each second contact portion 134 has a pair of second receiving surfaces 135A, 135B, two second gates 135D, 135E, and a second protrusion 136. Each second contact portion 134 is arranged at a position to be aligned with the corresponding first contact portion 124 while the scion part 102 and the rootstock part 103 are secured.

In the present embodiment, the rootstock part 103 is a mirror image of the scion part 102 with respect to a plane perpendicular to axes of the stems of the plants P (specifically, a horizontal plane). In other words, the rootstock part 103 includes the constituent members of the scion part 102 arranged in a vertically inverted manner. The second contact portions 134 and the first contact portions 124, thus, have the same shape. The rootstock part 103, however, may have a portion partly different from the scion part 102.

The pair of second receiving surfaces 135A, 135B is provided at a position where the pair of second receiving surfaces 135A, 135B faces the second press portion 151 of the second holder 105 attached to the rootstock part 103, and the distance between the pair of second receiving surface 135A, 135B decreases along the direction I of pressing the second holder 105. The pair of second gates 135D, 135E is provided at the opening of a notch that forms the second contact portion 134.

The second receiving surfaces 135A, 135B and the second gates 135D, 135E respectively have the same shapes as those of the first receiving surfaces 125A, 125B and the first gates 125D, 125E of the scion part 102. Accordingly, detailed description of these components will be omitted. The second contact portions 134 do not have to have the pair of second gates 135D, 135E.

The second protrusion 136 is provided in a connected portion 135C of the pair of second receiving surfaces 135A, 135B (that is, in the innermost part of the second contact portion 134), and the second protrusion 136 protrudes in the plant P axis direction beyond the second receiving surfaces 135A, 135B. Specifically, the second protrusion 136 protrudes from the upper surface of the second plate 131 in a direction toward the tip of the plant P. The leading end of the second protrusion 136 is curved like an arc.

The rootstock part 103 has two slits 139A, 139B, two grooves 139C, 139D, a pin 137A, a hole 137B, and two lower holes 138A, 138B. The slits 139A, 139B, the grooves 139C, 139D, the pin 137A, and the hole 137B respectively have the same shapes as those of the slits 129A, 129B, the grooves 129C, 129D, the pin 127A, and the hole 127B of the scion part 102.

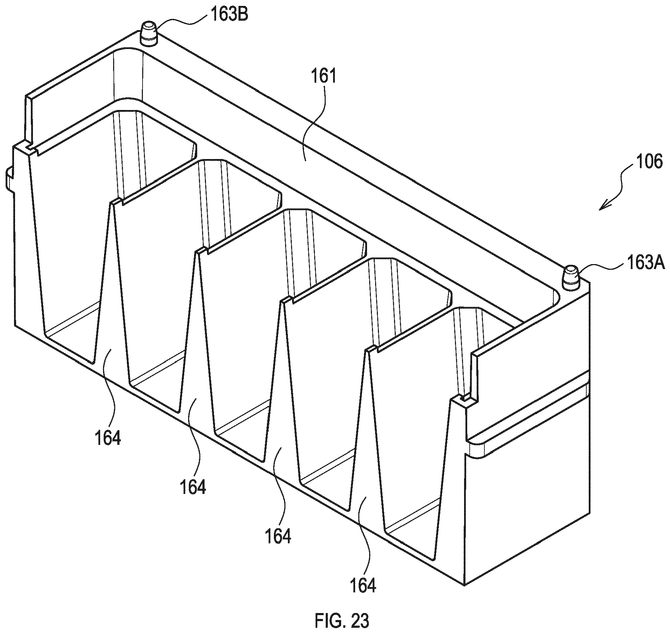

The two lower holes 138A, 138B form a securing mechanism that secures the support part 106 to the rootstock part 103. The two lower holes 138A, 138B are arranged where the two lower holes 138A, 138B face and abut the support part 106 (that is, on the lower surface of the second frame 133), and respectively mate with the two pins 163A, 163B (see FIG. 23) of the support part 106.

### <First Holder>

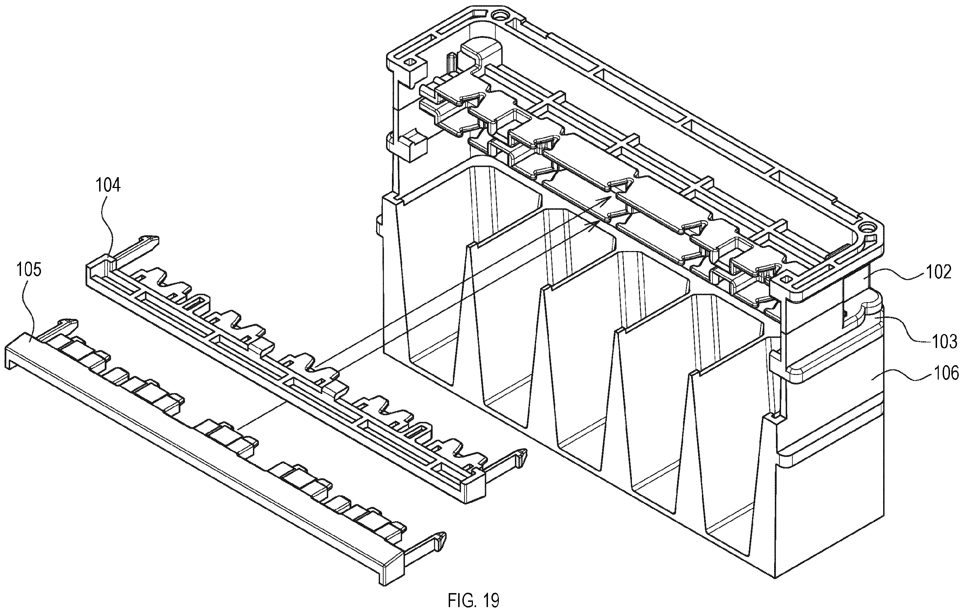

As shown in FIG. 19, the first holder 104 is configured such that the first holder 104 can be secured to the scion part 102. In the present embodiment, the first holder 104 is inserted in the horizontal direction to be aligned with the first plate 121 of the scion part 102. Accordingly, the first holder 104 is secured to the scion part 102.

As shown in FIG. 20A, the first holder 104 has first press portions 141 that press the respective stems of the plants P against the first contact portions 124 of the scion part 102. The first press portions 141 are arranged at positions where the first press portions 141 face the first contact portions 124 in the direction I of pressing the first holder 104.

The first press portions 141 are arranged in parallel in a direction intersecting the direction I of pressing the first holder 104. Each of the first press portions 141 has a pair of first guide surfaces 142A, 142B and a first cushioning material 142C.

The first cushioning material 142C is a plate-shaped member that presses the stem of the plant P against the corresponding first contact portion 124. The first cushioning material 142C is made of a material that can be deformed to a certain extent by contact of the stem of the plant P.

Examples of the material forming the first cushioning material 142C include porous materials such as sponges. Elastic materials, such as rubber, may be also used for the material forming the first cushioning material 142C. In FIG. 20A and other drawings, the first cushioning material 142C has a square planar shape; the planar shape of the first cushioning material 142C, however, may be, for example, triangular, circular, or any other shape.

As shown in FIG. 20B, the pair of first guide surfaces 142A, 142B is, in a planar view, spaced apart from each other and protrudes in the direction I of pressing the first holder 104 beyond the first cushioning material 142C. The pair of first guide surfaces 142A, 142B is provided at a position where the pair of first guide surfaces 142A, 142B faces the first contact portion 124 of the scion part 2, and the distance between the pair of first guide surfaces 142A, 142B increases along the direction I of pressing the first holder 104.

Specifically, the first cushioning materials 142C are fixed to supports 147 that protrude in the direction I of pressing from a frame 145, extending in a direction perpendicular to the direction I of pressing, by, for example, an adhesive. As shown in FIG. 20C, the supports 147 have plate-shaped extended portions 146 overlapping the first cushioning materials 142C in the thickness direction. The supports 147 are stacked with the first plate 121 of the scion part 102 in the thickness direction while the first holder 104 is secured to the scion part 102. The extended portions 146 slide on the plate surface of the first plate 121 when the first holder 104 is inserted. In the present embodiment, the first cushioning materials 142C are fixed to the surfaces of the extended portions 146; the first cushioning materials 142C, however, may be fixed to surfaces of other portions apart from the extended portions 146 of the supports 147.

The pair of first guide surfaces 142A, 142B is formed by the end faces of the extended portions 146. The first cushioning materials 142C are disposed to overlap a part of the pair of first guide surfaces 142A, 142B in the plant P axis direction (that is, in the thickness direction the first cushioning materials 142C).

As shown in FIG. 20A, the pair of first guide surfaces 142A, 142B has a shape of a curved line that is bent smoothly when viewed from the plant P axis direction. The edges of the pair of first guide surfaces 142A, 142B in the plant P axis direction are chamfered.

The end of the first cushioning material 142C, together with a part of the pair of first guide surfaces 142A, 142B, forms a C-shaped recess when viewed in the thickness direction of the first cushioning material 142C. The stem of the plant P placed in the first contact portion 124 is brought into contact with the first cushioning material 142C of the first press portion 141 and the first protrusion 126 of the first contact portion 124. The stem of the plant P is retained between the first contact portion 124 and the first press portion 141, thus being inhibited from moving in the direction of the diameter of the stem.

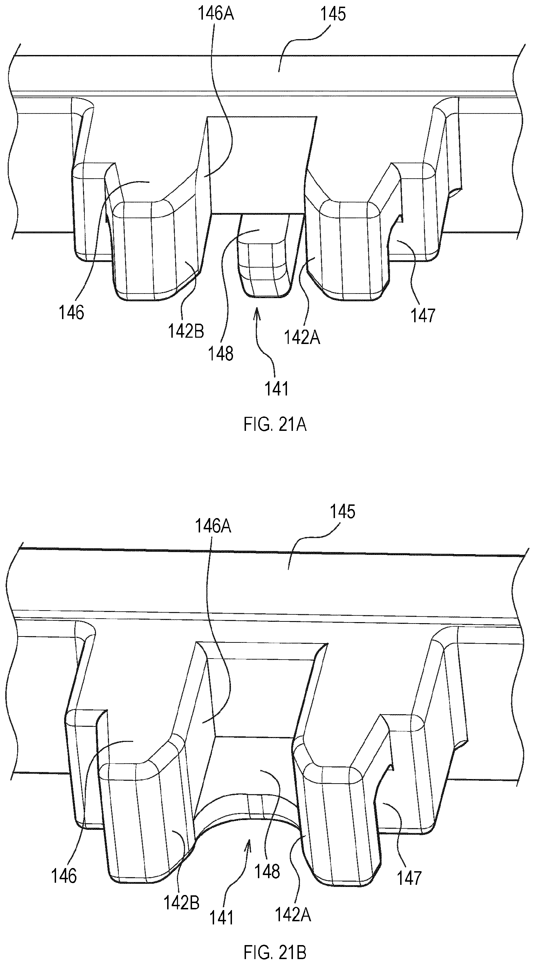

The extended portions 146 do not have to be plate-shaped, and may have a shape with a thickness that is equivalent to the thickness of the frame 145 as shown in FIG. 21A or FIG. 21B. In the configuration shown in FIG. 21A or FIG. 21B, the first cushioning material 142C (not shown in FIG. 21A and FIG. 21B) is placed on a mount 148 disposed between the pair of first guide surfaces 142A, 142B, and is fixed to the upper surface of the mount 148 or the lateral surfaces 146A of the extended portion 146.

As shown in FIG. 20A, the first holder 104 has two snaps 144A, 144B, two blocks 144C, 144D, and two tabs 144E, 144F. The two snaps 144A, 144B protrude from the frame 145 in the direction I of pressing, and are provided at positions where the two snaps 144A, 144B interpose the first press portions 141 therebetween. The two blocks 144C, 144D and the two tabs 144E, 144F protrude from the frame 145 in the direction I of pressing, and are each disposed between the first press portions 141.

The snaps 144A, 144B are a securing mechanism to detachably secure the first holder 104 to the scion part 102, and is inserted into the slits 129A, 129B of the scion part 102. The snaps 144A, 144B have hook-shaped ends that are engageable with protrusions provided in the slits 129A, 129B.

The blocks 144C, 144D and the tabs 144E, 144F are a guide mechanism to guide insertion of the first holder 104 along the direction I of pressing. The blocks 144C, 144D are inserted into the grooves 129C, 129D of the scion part 102. The tabs 144E, 144F overlap the plate surface of the first plate 121 of the scion part 102.

### <Second Holder>

As shown in FIG. 19, the second holder 105 is configured such that the second holder 105 can be secured to the rootstock part 103. In the present embodiment, the second holder 105 is inserted to overlap the second plate 131 of the rootstock part 103 in the horizontal direction. Accordingly, the second holder 105 is secured to the rootstock part 103.

As shown in FIG. 22, the second holder 105 has second press portions 151 that press the respective stems of the plants P against the second contact portions 134 of the rootstock part 103. The second press portions 151 are arranged at positions where the second press portions 151 face the second contact portions 134 in a direction I of pressing the second holder 105.

The second press portions 151 are arranged in parallel in a direction intersecting the direction I of pressing the second holder 105. Each of the second press portions 151 has a pair of second guide surfaces 152A, 152B and a second cushioning material 152C.

In the present embodiment, the second holder 105 is a mirror image of the first holder 104 with respect to a plane perpendicular to axes of the stems of the plants P (specifically, a horizontal plane). In other words, the second holder 105 is a vertical inversion of the first holder 104. The second holder 105, however, may have a portion partly different from the first holder 104.

The second cushioning material 152C is a plate-shaped member that presses the stem of the plant P against the corresponding second contact portion 134. The pair of second guide surfaces 152A, 152B is, in a planar view, spaced apart from each other and protrudes in the direction I of pressing the second holder 105 beyond the second cushioning material 152C. The pair of second guide surfaces 152A, 152B is arranged at a position where the pair of second guide surfaces 152A, 152B faces the second contact portion 134 of the rootstock part 103, and the distance between the pair of second guide surfaces 152A, 152B increases along the direction I of pressing the second holder 105.

The second guide surfaces 152A, 152B and the second cushioning material 152C have the same shapes as those of the first guide surfaces 142A, 142B and the first cushioning material 142C of the first press portion 141 of the first holder 104. Accordingly, detailed description of these components will be omitted.

The second holder 105 has two snaps 154A, 154B each protruding from a frame 155, two blocks 154C, 154D, and two tabs 154E, 154F. The snaps 154A, 154B, the blocks 154C, 154D, and the tabs 154E, 154F respectively have the same shapes as those of the snaps 144A, 144B, the blocks 144C, 144D, and the tabs 144E, 144F of the first holder 104.

The two snaps 154A, 154B are inserted into the slits 139A, 139B of the rootstock part 103. The two blocks 154C, 154D are inserted into the grooves 139C, 139D of the rootstock part 103.

As shown in FIG. 15, a space S is provided between the first holder 104 secured to the scion part 102 and the second holder 105 secured to the rootstock part 103 to expose the stems of the plants P. The stems are cut in the space S to acquire scions and rootstocks of the plants P.

### <Support Part>

As shown in FIG. 16, the support part 106 supports pods Q in which the roots of the plants P are contained.

As shown in FIG. 23, the support part 106 has a body 161, partitions 164, and two pins 163A, 163B. In the present embodiment, the support part 106 is configured to be detachable from the rootstock part 103.

The body 161 is provided, by the partitions 164, with internal spaces into which the pods of the plants P can be inserted. The two pins 163A, 163B are disposed where the two pins 163A, 163B face and abut the rootstock part 103 (specifically, the upper surface of the body 161), and respectively mate with lower holes 138A, 138B of the rootstock part 103.

### [3-2. Effects]

The embodiments described hereinabove in detail achieve the following effects.
(3a) The first contact portions 124 and the first press portions 141, and the second contact portions 134 and the second press portions 151 enable securing of the stems of the plants P respectively in the scion part 102 and the rootstock part 103 at two positions, namely at the upper position and the lower position, in the vicinity of cut sections. Accordingly, the positional accuracy of the stems to be joined is improved. Moreover, the first cushioning materials 142C and the second cushioning materials 152C can inhibit displacement of the stems. As a result, grafting accuracy is improved.
(3b) The pairs of first guide surfaces 142A, 142B protrude beyond the first cushioning materials 142C, and the pairs of second guide surfaces 152A, 152B protrude beyond the second cushioning material 152C. This configuration facilitates to guide the stems of the plants P easily and accurately to the first cushioning materials 142C and the second cushioning materials 152C.
(3c) The disposition of the first cushioning material 142C and the second cushioning material 152C to respectively overlap the pair of first guide surfaces 142A, 142B and the pair of second guide surfaces 152A, 152B in the plant P axis direction facilitates positioning of the first cushioning materials 142C and the second cushioning materials 152C respectively on the first holder 104 and the second holder 105. As a result, the first cushioning materials 142C and the second cushioning materials 152C can be easily replaced.
(3d) Due to the securing mechanisms made up of the pin 127A and the hole 127B of the scion part 102 and the pin 137A and the hole 137B of the rootstock part 103, rootstocks and scions after joining can be pressed each other. As a result, it is possible to inhibit separation between the rootstocks and the scions during healing or during transportation.

### [4. Fourth Embodiment]

### [4-1. Configuration]

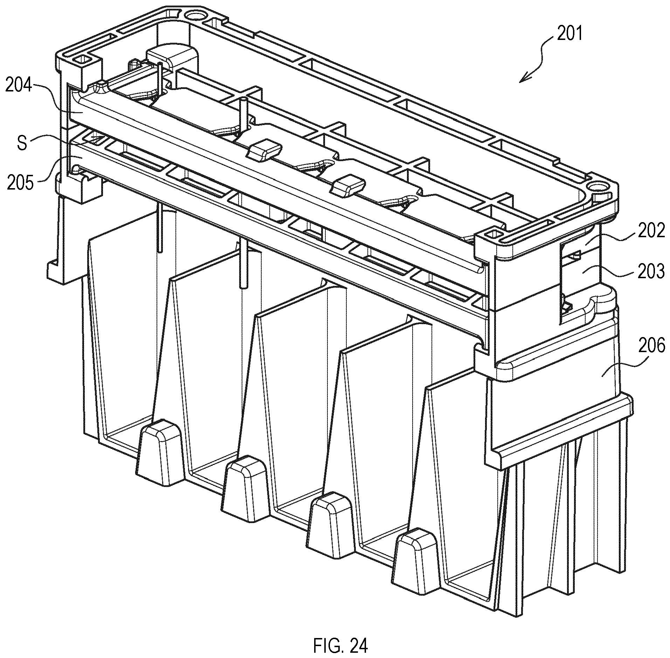

A grafting member 201 shown in FIG. 24 is a cassette type member for cutting plants and acquiring scions and rootstocks and for joining the acquired scions and rootstocks.

The grafting member 201 shown in FIG. 24 is configured such that the grafting member 201 can be used as the first grafting member to acquire scions and also as the second grafting member to acquire rootstocks. Specifically, a grafting member set of the present embodiment comprises the grafting member 201 as the first grafting member and the grafting member 201 as the second grafting member.

The grafting member 201 comprises a scion part 202, a rootstock part 203, a first holder 204, a second holder 205, and a support part 206. The grafting member 201 is a rearrangement of the scion part 102, the rootstock part 103, the first holder 104, and the second holder 105 of the grafting member 101 in FIG. 15. The support part 206 of the grafting member 201 is similar to the support part 106 of the grafting member 101 in FIG. 15; the description of which, thus, will be omitted.

### <Scion Part>

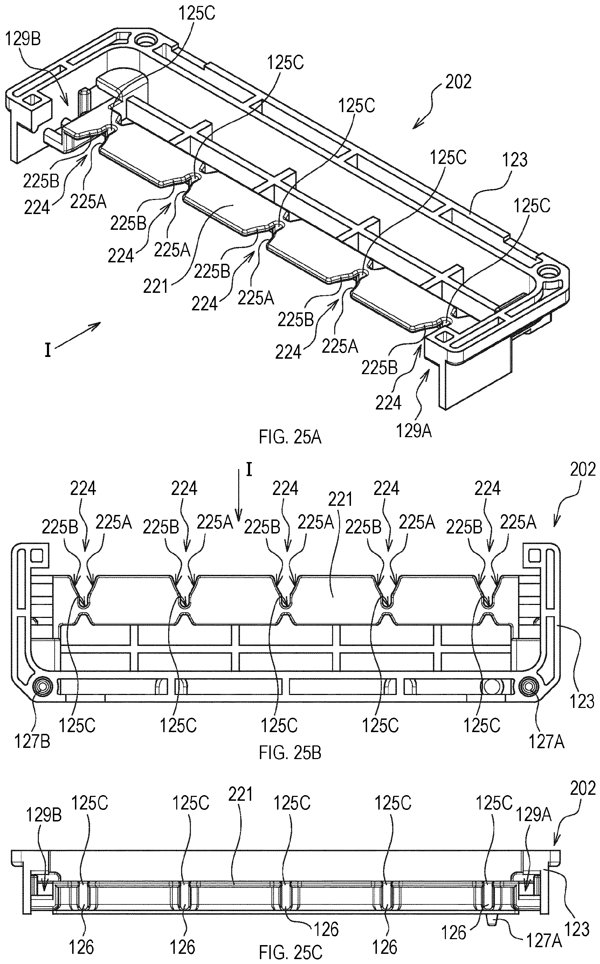

As shown in FIG. 25A, the scion part 202 has a first plate 221 and a first frame 123 supporting the first plate 221. Out of the components of the scion part 202, those that are identical to the components of the scion part 102 in FIG. 15 will be hereinafter assigned with the same reference numerals, and description of such components will be omitted.

Similarly to the grafting member 101 in FIG. 15, the first plate 221 has first contact portions 224 that come into respective stems of the plants P. The first contact portions 224 are similar to the first contact portions 124 of the grafting member 101 in FIG. 15 except that the shape of the first contact portions 224 in planar view is different.

Each first contact portion 224 has a pair of first receiving surfaces 225A, 225B and a first protrusion 126 (see FIG. 25C). The pair of first receiving surfaces 225A, 225B is provided at a position where the pair of first receiving surfaces 225A, 225B faces the first press portion 241 of the first holder 204 attached to the scion part 202, and the distance between the pair of first receiving surfaces 225A, 225B decreases along a direction I of pressing the first holder 204.

As shown in FIG. 25B, the pair of first receiving surfaces 125A, 125B each have a curve 225D that is bent smoothly when viewed from the plant P axis direction, and a planar portion 225E formed by a planar surface parallel to the plant P axis direction.

The planar portion 225E is provided continuously to a connected portion 125C of the pair of first receiving surfaces 125A, 125B (that is, the first protrusion 126). The planar portion 225E is arranged on the inner side of the curves 225D, that is, between the curve 225D and the first protrusion 126.

### <Rootstock Part>

The rootstock part 203 is a mirror image of the scion part 202 with respect to a plane perpendicular to axes of the stems of the plants P (specifically, a horizontal plane). In other words, the rootstock part 203 includes the constituent members of the scion part 202 arranged in a vertically inverted manner.

Accordingly, the rootstock part 203 is configured such that the second contact portions 134 in the rootstock part 103 shown in FIG. 15 are identically shaped to the first contact portions 224 of the scion part 202. The rootstock part 203, however, may have a portion partly different from the scion part 202.

### <First Holder>

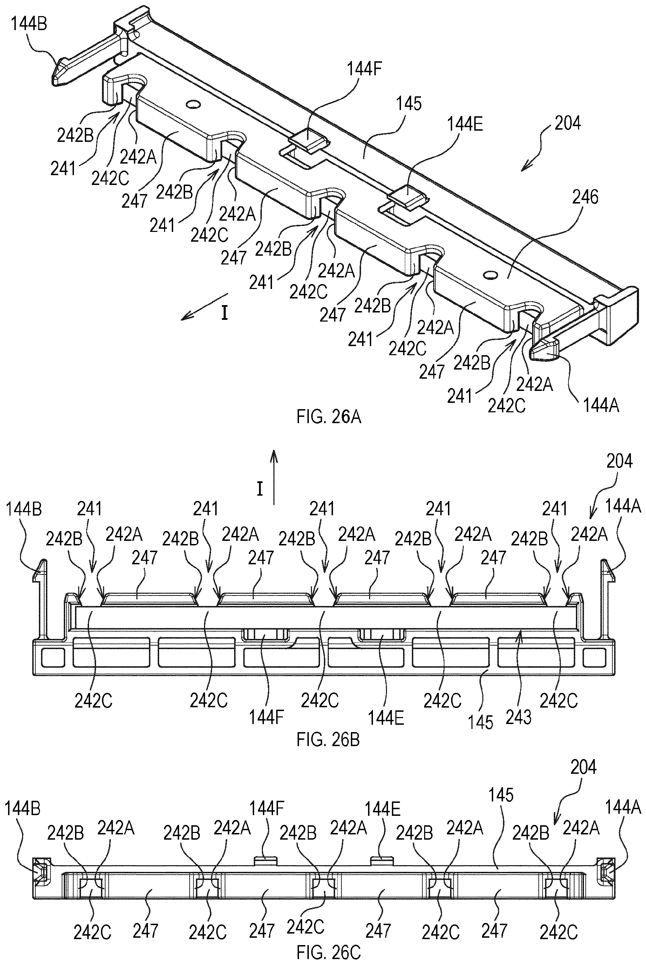

The first holder 204 is configured such that the first holder 204 can be secured to the scion part 202. As shown in FIGS. 26A, 26B, the first holder 204 has first press portions 241 that press the respective stems of the plants P against the first contact portions 224 of the scion part 202, and a first cushioning material structure 243 disposed across the first press portions 241. Out of the components of the first holder 204, those that are identical to the components of the first holder 104 in FIG. 15 will be hereinafter assigned with the same reference numerals, and description of such components will be omitted.

The first press portions 241 are arranged at positions where the first press portions 241 face the first contact portions 224 in the direction I of pressing the first holder 204. Each of the first press portions 241 has a pair of first guide surfaces 242A, 242B and a first cushioning material 242C.

The first guide surfaces 242A, 242B and the first cushioning material 242C have the same functions as those of the first guide surfaces 142A, 142B and the first cushioning material 142C in the first press portion 141 of the first holder 104 in FIG. 15.

The first cushioning materials 242C of the first press portions 241 are each a part of the first cushioning material structure 243. Specifically, as shown in FIGS. 26B and 26C, the portions of the first cushioning material structure 243 that are exposed between walls 247 constitute the respective first cushioning materials 242C.

The material of the first cushioning material structure 243 is the same as that of the first cushioning materials 142C in the first holder 104 in FIG. 15. The first cushioning material structure 243 is rod-shaped and arranged so that the longitudinal direction of the rod shape intersects the direction I of pressing the first holder 204.

Specifically, the first cushioning material structure 243 is disposed in a groove provided between the frame 145 and the walls 247 that are spaced apart from the frame 145 in the direction I of pressing. The walls 247 extend in a direction intersecting the direction I of pressing, and the ends of the walls 247 in the extending direction constitute the first guide surfaces 142A, 142B.

The first cushioning material structure 243 is fixed to the frame 145, walls 247, or an extended portion 246 extending from the frame 145 by, for example, an adhesive. The extended portion 246 couples the frame 145 and the walls 247, and forms the bottom surface of the groove in which the first cushioning material structure 243 is disposed.

### <Second Holder>

The second holder 205 is configured such that the second holder 205 can be secured to the rootstock part 203. The second holder 205 is a mirror image of the first holder 204 with respect to a plane perpendicular to axes of the stems of the plants P (specifically, a horizontal plane). In other words, the second holder 205 is a vertical inversion of the first holder 204.

Accordingly, the second holder 205 is achieved by placing a second cushioning material structure on the second holder 105 in FIG. 15 across the second press portions 151. The second holder 205, however, may have a portion partly different from the first holder 204.

### [4-2. Effects]

The embodiments described hereinabove in detail achieve the following effects.
(4a) By making the cushioning materials of the first holder 204 and the cushioning materials of second holder 205 into respective single cushioning material structures, it is possible to reduce the number of parts disposed in the holders. As a result, attachment and replacement of cushioning materials can be facilitated.
(4b) With the planar portions of the receiving surfaces of the scion part 202 and the receiving surfaces of the rootstock part 203, it is possible to accurately guide the stems of plants to specified positions by the first holder 204 and the second holder 205, while biting by the stems are inhibited.

### [5. Fifth Embodiment]

### [5-1. Configuration]

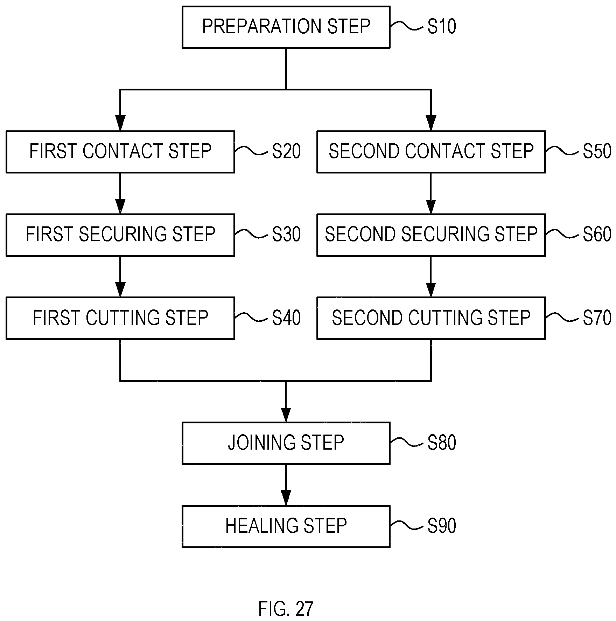

A method for producing grafted seedlings shown in FIG. 27 is to produce seedlings by grafting scions and rootstocks with the grafting member 1 in FIG. 1, the grafting member 10 in FIG. 9, the grafting member 101 in FIG. 15, or the grafting member 201 in FIG. 24. Hereinbelow, the grafting member 1 in FIG. 1 will be used to describe each step.

The method for producing grafted seedlings in the present embodiment comprises a preparation step S10, a first contact step S20, a first securing step S30, a first cutting step S40, a second contact step S50, a second securing step S60, a second cutting step S70, a joining step S80, and a healing step S90.

### <Preparation Step>

In the present step, the grafting member 1 as the first grafting member and the grafting member 1 as the second grafting member are prepared.

### <First Contact Step>

In the present step, the rootstock part 3 is attached to the scion part 2; stems of first plants, which supply scions, are brought into contact with the first contact portions 24 of the scion part 2 in the first grafting member while the first holder 4 and the second holder 5 are unattached; and the stems of the first plants are thus brought into contact with the second contact portions 34 of the rootstock part 3 in the first grafting member.

In the above-described operation, pods of the first plants are inserted into the support part 6 attached to the rootstock part 3. The rootstock part 3 may be attached to the support part 6 upon insertion of the pods of the first plants into the support part 6.

### <First Securing Step>

In the present step, the first holder 4 and the second holder 5 are secured to the scion part 2 and the rootstock part 3 in the first grafting member so that the stems of the first plants are secured between the first contact portions 24 and the first press portions 41 and between the second contact portions 34 and the second press portions 51. The first holder 4 and the second holder 5 may be secured in any order.

### <First Cutting Step>

In the present step, the stems of the first plants are concurrently cut in the space S between the first holder 4 and the second holder 5 in the first grafting member (that is, at a position close to roots of the first plants as compared with the first holder 4).

### <Second Contact Step>

The present step is the same as the first contact step S20 except that the second grafting member is used in place of the first grafting member, and the second plants that supply rootstocks are used in place of the first plants.

### <Second Securing Step>

The present step is the same as the first securing step S30 except that the second grafting member and the second plants are used.

### <Second Cutting Step>

The present step is the same as the first cutting step S40 except that the second grafting member and the second plants are used and the stems of the second plants are cut in the space S between the first holder 4 and the second holder 5 (that is, at a position away from roots of the second plants as compared with the second holder 5). However, it is desirable in light of joining properties that the second plants are cut at a position close to the tips of the plants as compared with the cut position of the first plants.

### <Joining Step>

In the present step, cut surfaces of the stems of the first plants secured by the scion part 2 of the first grafting member and cut surfaces of the stems of the second plants secured by the rootstock part 3 of the second grafting member are concurrently joined.

### <Healing Step>

In the present step, plants achieved by joining scions derived from the first plants and rootstocks derived from the second plants undergo healing. The healing is performed, for example, in a light place under weak light.

The secured states of the first holder 4 of the first grafting member and the second holder 5 of the second grafting member respectively to the scion part 2 and the rootstock part 3 are maintained until the healing step S90.

### [5-2. Effects]

The embodiments described hereinabove in detail achieve the following effects.

(5a) Use of the grafting member 1 can improve grafting accuracy. Productivity of grafted seedlings can be also improved since the already-grown first plant and second plant are used. Furthermore, grafting can be performed irrespective of the size of plants. Moreover, since one type of the grafting member 1 can be used for both scions and rootstocks, the equipment cost can be reduced.

### [6. Sixth Embodiment]

### [6-1. Configuration]

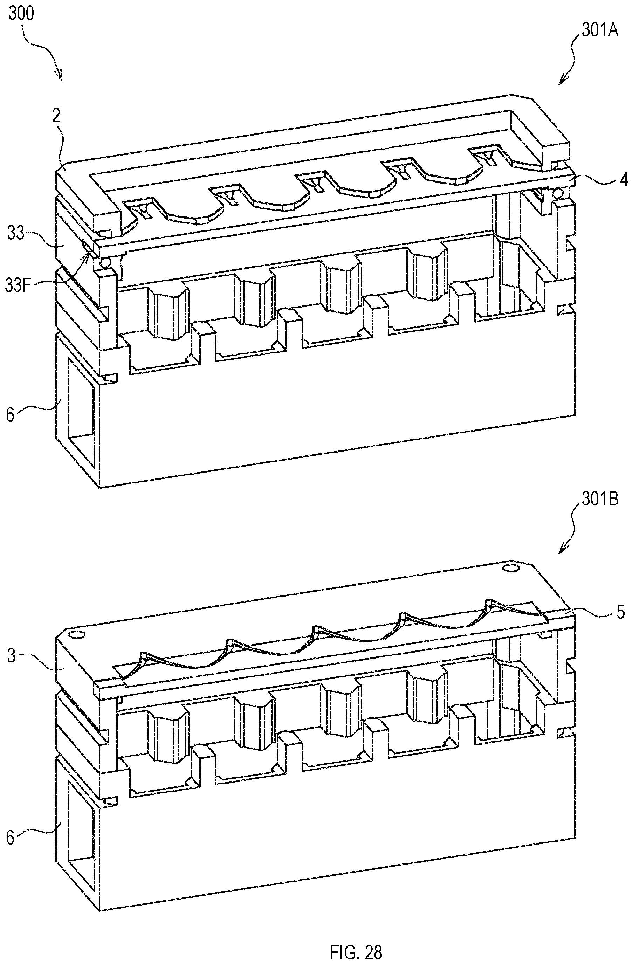

A grafting member set 300 shown in FIG. 28 comprises a first grafting member 301A and a second grafting member 301B. In the grafting member set 300, the first grafting member 301A and the second grafting member 301B have different shapes.

The first grafting member 301A corresponds to the grafting member 1 in FIG. 1 from which the second upper plate 31, the second lower plate 32, and the second contact portions 34 (that is, portions other than the second frame 33) of the rootstock part 3, and the second holder 5 are removed. The scion part 2, the second frame 33, the first holder 4, and the support part 6 of the first grafting member 301A are identical to those of the grafting member 1 in FIG. 1. In the first grafting member 301A, plants are cut in a space between the first holder 4 and the second frame 33.

The second grafting member 301B corresponds to the grafting member 1 in FIG. 1 from which the scion part 2 and the first holder 4 are removed. The rootstock part 3, the second holder 5, and the support part 6 of the second grafting member 301B are identical to those of the grafting member 1 in FIG. 1. In the second grafting member 301B, plants are cut at a position along the upper surface of the rootstock part 3.

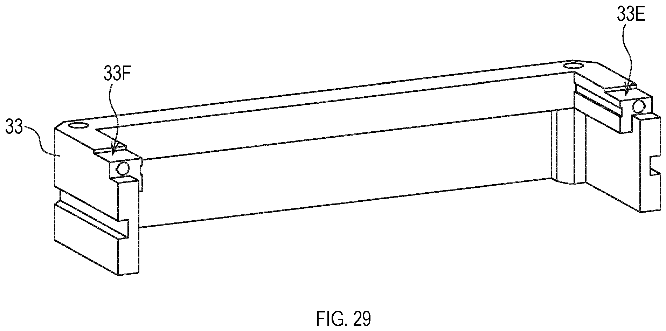

As shown in FIG. 29, the second frame 33 of the first grafting member 301A has depressions (steps) 33E, 33F, having a height smaller than the remainder portion of the second frame 33, on the upper surface (that is, the surface facing the scion part 2) of the second frame 33 at the end from which the first holder 4 is inserted. In other words, in the first grafting member 301A, plants are cut on the lower side of the cut position (that is, the upper surface of the rootstock part 3) in the second grafting member 301B.

### [6-2. Effects]

The embodiments described hereinabove in detail achieve the following effects.
(6a) In the first grafting member 301A, the recesses 33E, 33F allow cutting of plants at a position closer to the roots of the plants than in the second grafting member 301B. Accordingly, the cut position of rootstocks is located close to the tips of the plants as compared with the cut position of scions, and overlapping portions are created in the axis direction of the plants. This improves joining properties of rootstocks and scions.
(6b) Since the first grafting member 301A and the second grafting member 301B have minimum configurations respectively required for acquiring scions and rootstocks, the number of parts is reduced as compared with the grafting member 1 in FIG. 1. As a result, the cost of each grafting member can be reduced.

### [7. Other Embodiments]

Embodiments of the present disclosure are described hereinabove; it goes without saying, however, that the present disclosure can be implemented in various modes without being limited to the above-described embodiments.
(7a) In the grafting members of the above-described embodiments, the width of the first protrusions and the width of the second protrusions do not have to be decreased with an increase in distance respectively from the pair of first receiving surfaces and the pair of second receiving surfaces. Moreover, the first contact portions and the second contact portions do not have to have the first protrusions and the second protrusions, respectively.
(7b) In grafting members of the above-described embodiments, each pair of first receiving surfaces, the pair of first guide surfaces, the pair of second receiving surfaces, and the pair the second guide surfaces does not have to have the shape of a curved line that is bent when viewed from the axis direction of plants. In other words, these surfaces may have the shape of straight lines (that is, flat surfaces) when viewed from the axis direction of plants.
(7c) In the grafting members in the above-described embodiments, the first press portions and the second press portions do not have to have the respective cushioning materials. Moreover, the first press portions and the second press portions do not have to have the pairs of first guide surfaces and the pairs of second guide surfaces, respectively.
(7d) In the grafting members in the above-described embodiments, the direction of pressing the first holder and the direction of pressing the second holder are not limited to the horizontal direction. Moreover, the first holder and the second holder do not have to be inserted into the scion part and the rootstock part, respectively. For example, the first holder and the second holder may be secured by other members while being respectively pressed against the scion part and the rootstock part.
(7e) In the grafting member in the above-described embodiments, other mechanisms apart from the magnets, the combination of the protrusions and the holes, and the snap mechanism, which have been described in the aforementioned embodiments, may be used for the securing mechanism that secures the scion part to the rootstock part, the securing mechanism that secures the first holder to the scion part, and the securing mechanism that secures the second holder to the rootstock part. Furthermore, the grafting member does not necessarily have to comprise these securing mechanisms.
(7f) In the grafting member in the above-described embodiments, the support part may be undetectably fixed to (that is, integrated with) the rootstock part. Moreover, the grafting member does not necessarily have to comprise the support part.
(7g) In the method for producing grafted seedling in the above-described embodiment, the grafting member 1 in FIG. 1 may be substituted with the first grafting member 301A and the second grafting member 301B of the grafting member set 300 in FIG. 28. In this case, the stems of the first plants do not have to be brought into contact with the second contact portions 34 in the first contact step, and the stems of the second plants do not have to be brought into contact with the first contact portions 24 in the second contact step. Moreover, the second holder 5 does not have to be secured in the first securing step, and the first holder 4 does not have to be secured in the second securing step.
(7h) The grafting member in the above-described embodiments may be configured to be capable of retaining one piece of plant. Moreover, each step may be performed for one piece of the first plant and one piece of the second plant in the method for producing grafted seedling in the above-described embodiment.
(7i) The grafting member in the above-described embodiments may further comprise an additional rootstock part that is detachable from the rootstock part and has at least one third contact portion that comes into contact with a stem of a plant at a third position that is close to the roots of the plant as compared with the second position. The grafting member may further comprise a third holder that can be secured to the additional rootstock part and has at least one third press portion that presses the stem of the plant against at least one third contact portion. Between the third holder and the second holder, a space is provided to expose the stem of the plant.

The additional rootstock part has a configuration similar to that of the scion part or the rootstock part. The third holder has a configuration similar to that of the first holder or the second holder. The support part that supports the pods may be attached to the additional rootstock part.

The drafting member comprising the additional rootstock part and the third holder (hereinafter also referred to as an "intermediate rootstock grafting member") is used for grafting three or more types of different plants by grafting a scion, an intermediate rootstock, and a rootstock. The intermediate rootstock consists of a stem of a plant from which the roots and the stem tip are cut off. In the intermediate rootstock grafting member, the plans retained therein are cut at two points, namely at an upper point and a lower point, to make the scion, the intermediate rootstock, and the rootstock. In other words, the intermediate rootstock is retained in the rootstock part, and the rootstock is retained in the additional rootstock part.

The scion part retaining the scion, the rootstock part retaining the intermediate rootstock, and the additional rootstock part retaining the rootstock are each joined with a scion part, a rootstock part, and an additional rootstock part retaining a scion, an intermediate rootstock, or a rootstock of other plants so as to perform grafting.

The intermediate rootstock grafting member may have two or more additional rootstock parts. In other words, the intermediate rootstock grafting member can be also used for grafting two or more intermediate rootstocks. In this case, a rootstock is retained in the additional rootstock part that is located farthest from the scion part.

(7j) For example, a function of one constituent element in the above-described embodiments may be divided as multiple constituent elements, and/or functions of multiple constituent elements may be consolidated and assigned to a single constituent element. Also, the configurations of the above-described embodiments may be partly omitted. Further, at least a part of a configuration in the above-described embodiments may be added to, or may replace, another configuration of the above-described embodiments. Any form that falls within the scope of the technical ideas defined in the language of the appended claims may be an embodiment of the present disclosure.

### [8. Examples]

The following describes details of tests conducted to confirm the effects of the present disclosure, and evaluation of the effects.

### <Example 1>

Seeds for rootstock tomatoes and seeds for scion tomatoes were sown in respective trays with soil for a gardening use, covered with vermiculite for a gardening use, and then left the seeds for water absorption and germination.

A grafting operation was performed on the seedlings raised for one to two weeks after the seeding using the grafting member 1 in FIG. 1. Specifically, the rootstock plants and the scion plants were removed from the trays and secured in the grafting member.

After securing each plant, the stem of each plant was cut with a razor, and the rootstock part and the scion part were separated. After separation of the units, the scion part, where the plants for scions were secured, was secured to the rootstock part where the plants for rootstocks were secured. Subsequently, the plants were healed under high-humidity conditions for three to five days for rooting of the stems of the rootstock plants and the scion plants.

### <Example 2>

Grafting was performed under the same conditions as in Example 1 except that the grafting member 101 in FIG. 15 was used as the grafting member.

### <Example 3>

Grafting was performed under the same conditions as in Example 1 except that the grafting member 201 in FIG. 24 was used as the grafting member.

### <Comparative Example>

Grafting was performed under the same conditions as in Example 1 except that the seedling nursery member disclosed in International Patent Publication No. 2016/129683 was used as the grafting member.

### <Evaluation>

The rates of stem damages caused when the stems of the plants were secured in the grafting members were evaluated in Examples 1 to 3 and in Comparative Example. The damage rates were obtained by the ratios of the number of plants with damaged stems relative to the total number of plants used in the respective tests in Examples 1 to 3 and Comparative Example, and the examples were graded A, B, and C from an example with a smaller damage rate.

The rooting rates of the plants were also evaluated in Examples 1 to 3 and Comparative Example. The rooting rates were obtained by the ratios of the number of plants that had developed roots relative to the total number of plants used in the respective tests in Examples 1 to 3 and Comparative Example, and the examples were graded A, B, and C from an example with a higher rooting rate. Plants were determined to have developed roots if the scions did not separate from the rootstocks when being removed from the grafting member after the three to five days of healing.

The above-described damage rates and the rooting rates are shown in Table 1. As shown in Table 1, all Embodiments 1 to 3 had better rooting rates than Comparative Example.

**[Table 1]**

| | Damage Rate | Rooting Rate |
|---|---|---|
| Comparative Example | A | C |
| Example 1 | A | B |
| Example 2 | B | A |
| Example 3 | A | A |

## Claims

1. A grafting member comprising:
a scion part including at least one first contact portion configured to come into contact with a stem of a plant at a first position;
a rootstock part detachable from the scion part, the rootstock part including at least one second contact portion configured to come into contact with the stem of the plant at a second position located close to roots of the plant as compared with the first position;
a first holder securable to the scion part, the first holder including at least one first press portion configured to press the stem of the plant against the at least one first contact portion; and
a second holder securable to the rootstock part, the second holder including at least one second press portion configured to press the stem of the plant against the at least one second contact portion,
wherein a space is provided between the first holder secured to the scion part and the second holder secured to the rootstock part to expose the stem of the plant.

2. The grafting member according to claim 1,
wherein the at least one first contact portion includes a pair of first receiving surfaces provided at a position where the pair of first receiving surfaces faces the at least one first press portion, a distance between the pair of first receiving surfaces decreasing along a direction of pressing the first holder,
wherein the at least one first press portion includes a pair of first guide surfaces provided at a position where the pair of first guide surfaces faces the at least one first contact portion, a distance between the pair of first guide surfaces increasing along the direction of pressing the first holder,
wherein the at least one second contact portion includes a pair of second receiving surfaces provided at a position where the pair of second receiving surfaces faces the at least one second press portion, a distance between the pair of second receiving surfaces decreasing along a direction of pressing the second holder, and
wherein the at least one second press portion includes a pair of second guide surfaces provided at a position where the pair of second guide surfaces faces the at least one second contact portion, a distance between the second guide surfaces increasing along the direction of pressing the second holder.

3. The grafting member according to claim 2,
wherein each of the at least one first press portion and the at least one second press portion includes a cushioning material disposed in a connected portion between the pair of first guide surfaces or between the pair of second guide surfaces.

4. The grafting member according to any one of claims 1 to 3,
wherein each of the scion part and the rootstock part includes two or more plates provided with the at least one first contact portion or the at least one second contact portion,
wherein the two or more plates include:
at least one first plate; and
at least one second plate displaced relative to the at least one first plate in a direction parallel to an axis of the stem of the plant.

5. The grafting member according to claim 1,
wherein the at least one first press portion includes a first cushioning material configured to be deformed by contact of the stem of the plant, and
wherein the at least one second press portion includes a second cushioning material configured to be deformed by contact of the stem of the plant.

6. The grafting member according to claim 5,
wherein the at least one first press portion includes a pair of first guide surfaces spaced apart from each other and protruding in a direction of pressing the first holder beyond the first cushioning material, a distance between the pair of first guide surfaces increasing along the direction of pressing the first holder, and
wherein the at least one second press portion includes a pair of second guide surfaces spaced apart from each other and protruding in a direction of pressing the second holder beyond the second cushioning material, a distance between the pair of second guide surfaces increasing along the direction of pressing the second holder.

7. The grafting member according to claim 6,
wherein the first cushioning material is disposed to overlap a part of the pair of first guide surfaces in a direction parallel to an axis of the stem of the plant, and
wherein the second cushioning material is disposed to overlap a part of the pair of second guide surfaces in the direction parallel to the axis of the stem of the plant.

8. The grafting member according to any one of claims 5 to 7,
wherein the first holder includes:
two or more first press portions as the at least one first press portion; and
a first cushioning material structure disposed across the two or more first press portions,
wherein the second holder includes:
two or more second press portions as the at least one second press portion; and
a second cushioning material structure disposed across the two or more second press portions,
wherein the first cushioning material provided to each first press portion of the two or more first press portions is a part of the first cushioning material structure, and
wherein the second cushioning material provided to each second press portion of the two or more second press portions is a part of the second cushioning material structure.

9. The grafting member according to any one of claims 5 to 8,
wherein the at least one first contact portion includes a pair of first receiving surfaces provided at a position where the pair of first receiving surfaces faces the at least one first press portion, a distance between the pair of first receiving surfaces decreasing along a direction of pressing the first holder, and
wherein the at least one second contact portion includes a pair of second receiving surfaces provided at a position where the pair of second receiving surfaces faces the at least one second press portion, a distance between the pair of second receiving surfaces decreasing along a direction of pressing the second holder.

10. The grafting member according to claim 2, 3 or 9,
wherein the at least one first contact portion includes a first protrusion provided in a connected portion between the pair of first guide surfaces, the first protrusion protruding in a direction parallel to an axis of the stem of the plant beyond the pair of first receiving surfaces, and
wherein the at least one second contact portion includes a second protrusion provided in a connected portion between the pair of second receiving surfaces, the second protrusion protruding in the direction parallel to the axis of the stem of the plant beyond the pair of second receiving surfaces.

11. The grafting member according to claim 10,
wherein a width of the first protrusion, viewed from the direction of pressing the first holder, decreases with an increase in distance from the pair of first receiving surfaces, and
wherein a width of the second protrusion, viewed from the direction of pressing the second holder, decreases with an increase in distance from the pair of second receiving surfaces.

12. The grafting member according to claim 2, 3, 9, 10, or 11,
wherein each pair of the pair of first receiving surfaces and the pair of second receiving surfaces includes a curved portion that is bent in view from a direction parallel to an axis of the stem of the plant.

13. The grafting member according to claim 12,
wherein each pair of the pair of first receiving surfaces and the pair of second receiving surfaces further includes a flat portion provided in a connected portion of the pair of first receiving surfaces or in a connected portion of the pair of second receiving surfaces, and
wherein the flat portion is constituted with a planar surface parallel to the axis of the stem of the plant.

14. The grafting member according to any one of claims 1 to 13, further comprising a securing mechanism that secures the scion part to the rootstock part.

15. The grafting member according to any one of claims 1 to 14, further comprising a support part configured to support a pod where the roots of the plant are contained.

16. The grafting member according to any one of claims 1 to 15,
wherein the rootstock part has a shape that is a mirror image of the scion part with respect to a plane perpendicular to an axis of the stem of the plant.

17. A grafting member set comprising:
a first grafting member; and
a second grafting member,
the first grafting member including:
a scion part including at least one first contact portion configured to come into contact with a stem of a first plant; and
a first holder securable to the scion part, the first holder including at least one first press portion configured to press the stem of the first plant against the at least one first contact portion,
the second grafting member including:
a rootstock part including at least one second contact portion configured to come into contact with a stem of a second plant; and
a second holder securable to the rootstock part, the second holder including at least one second press portion configured to press the stem of the second plant against the at least one second contact portion,
wherein the scion part of the first grafting member is securable, while the first holder is secured to the scion part, to the rootstock part of the second grafting member while the second holder is secured to the rootstock part.

18. The grafting member set according to claim 17,
wherein the at least one first contact portion includes a pair of first receiving surfaces provided at a position where the pair of first receiving surfaces faces the at least one first press portion, a distance between the pair of first receiving surfaces decreasing along a direction of pressing the first holder,
wherein the at least one first press portion includes a pair of first guide surfaces provided at a position where the pair of first guide surfaces faces the at least one first contact portion, a distance between the pair of first guide surfaces increasing along the direction of pressing the first holder,
wherein the at least one second contact portion includes a pair of second receiving surfaces provided at a position where the pair of second receiving surfaces faces the at least one second press portion, a distance between the second receiving surfaces decreasing along a direction of pressing the second holder, and
wherein the at least one second press portion includes a pair of second guide surfaces provided at a position where the pair of second guide surfaces faces the at least one second contact portion, a distance between the second guide surfaces increasing along the direction of pressing the second holder.

19. The grafting member set according to claim 18,
wherein each of the at least one first press portion and the at least one second press portion includes a cushioning material disposed in a connected portion between the pair of first guide surfaces or between the pair of second guide surfaces.

20. The grafting member set according to any one of claims 17 to 19,
wherein each of the scion part and the rootstock part includes two or more plates provided with the at least one first contact portion or the at least one second contact portion,
wherein the two or more plates include:
at least one first plate; and
at least one second plate displaced relative to the first plate in a direction parallel to an axis of the stem of the first plant or the second plant.

21. The grafting member set according to claim 17,
wherein the at least one first press portion includes a first cushioning material configured to be deformed by contact of the stem of the first plant, and
wherein the at least one second press portion includes a second cushioning material configured to be deformed by contact of the stem of the second plant.

22. The grafting member set according to claim 21,
wherein the at least one first press portion includes a pair of first guide surfaces spaced apart from each other and protruding in a direction of pressing the first holder beyond the first cushioning material, a distance between the pair of first guide surfaces increasing along the direction of pressing the first holder, and
wherein the at least one second press portion includes a pair of second guide surfaces spaced apart from each other and protruding in a direction of pressing the second holder beyond the second cushioning material, a distance between the pair of second guide surfaces increasing along the direction of pressing the second holder.

23. The grafting member set according to claim 22,
wherein the first cushioning material is disposed to overlap a part of the pair of first guide surfaces in a direction parallel to an axis of the stem of the first plant, and
wherein the second cushioning material is disposed to overlap a part of the pair of second guide surfaces in a direction parallel to an axis of the stem of the second plant.

24. The grafting member set according to any one of claims 21 to 23,
wherein the first holder includes:
two or more first press portions as the at least one first press portion; and
a first cushioning material structure disposed across the two or more first press portions,
wherein the second holder includes:
two or more second press portions as the at least one second press portion; and
a second cushioning material structure disposed across the two or more second press portions,
wherein the first cushioning material provided to each first press portion of the two or more first press portions is a part of the first cushioning material structure, and
wherein the second cushioning material provided to each second press portion of the two or more second press portions is a part of the second cushioning material structure.

25. The grafting member set according to any one of claims 21 to 24,
wherein the at least one first contact portion includes a pair of first receiving surfaces provided at a position where the pair of first receiving surfaces faces the at least one first press portion, a distance between the pair of first receiving surfaces decreasing along a direction of pressing the first holder, and
wherein the at least one second contact portion includes a pair of second receiving surfaces provided at a position where the pair of second receiving surfaces faces the at least one second press portion, a distance between the pair of second receiving surfaces decreasing along a direction of pressing the second holder.

26. The grafting member set according to claim 18, 19, or 25,
wherein the at least one first contact portion includes a first protrusion provided in a connected portion between the pair of first receiving surfaces, the first protrusion protruding in a direction parallel to an axis of the stem of the first plant beyond the pair of first receiving surfaces, and
wherein the at least one second contact portion includes a second protrusion provided in a connected portion between the pair of second receiving surfaces, the second protrusion protruding in a direction parallel to an axis of the stem of the second plant beyond the pair of second receiving surfaces.

27. The grafting member set according to claim 26,
wherein a width of the first protrusion, viewed from the direction of pressing the first holder, decreases with an increase in distance from the pair of first receiving surfaces, and
wherein a width of the second protrusion, viewed from the direction of pressing the second holder, decreases with an increase in distance from the pair of second receiving surfaces.

28. The grafting member set according to claim 18, 19, 25, 26, or 27, wherein each pair of the pair of first receiving surfaces and the pair of second receiving surfaces includes a curved portion that is bent in view from a direction parallel to an axis of the stem of the first plant or the second plant.

29. The grafting member set according to claim 28,
wherein each pair of the pair of first receiving surfaces and the pair of second receiving surfaces further includes a flat portion provided continuously to the connected portion of the paired first receiving surfaces or to the connected portion of the paired second receiving surfaces, and
wherein the flat portion is constituted with a planar surface parallel to the axis of the stem of the first plant or the second plant.

30. The grafting member set according to any one of claims 17 to 29,
wherein at least one of the first grafting member and the second grafting member further includes a securing mechanism that secures the scion part to the rootstock part.

31. The grafting member set according to any one of claims 17 to 30,
wherein each of the first grafting member and the second grafting member further includes a support part configured to support pods where the roots of the first plant or the second plant are contained.

32. A holder for grafting configured to be secured to at least one of a scion part and a rootstock part, the scion part including at least one first contact portion configured to come into contact with a stem of a plant at a first position, the rootstock part being detachable from the scion part, and the rootstock part including at least one second contact portion configured to come into contact with the stem of the plant at a second position that is close to roots of the plant as compared with the first position, the holder comprising:
at least one press portion configured to press the stem of the plant against the at least one first contact portion or the at least one second contact portion,
wherein the holder is configured to be secured to the scion part or the rootstock part to provide a space between the first position and the second position to expose the stem of the plant.

33. The holder for grafting according to claim 32,
wherein the at least one press portion includes a pair of guide surfaces provided at a position where the pair of guide surfaces faces the first contact portion or the second contact portion, a distance between the pair of guide surfaces increasing along a direction of pressing the at least one press portion.

34. The holder for grafting according to claim 33,
wherein the at least one press portion includes a cushioning material disposed in a connected portion between the pair of guide surfaces.

35. The holder for grafting according to claim 32,
wherein the at least one press portion includes a cushioning material configured to be deformed by contact of the stem of the plant.

36. The holder for grafting according to claim 35,
wherein the at least one press portion includes a pair of guide surfaces spaced apart from each other and protruding in a direction of pressing the at least one press portion beyond the cushioning material, a distance between the pair of guide surfaces increasing along the direction of pressing the at least one press portion.

37. The holder for grafting according to claim 36,
wherein the cushioning material is disposed to overlap a part of the pair of guide surfaces in a direction parallel to an axis of the stem of the plant.

38. The holder for grafting according to any one of claims 35 to 37, further comprising:
two or more press portions as the at least one press portion; and
a cushioning material structure disposed across the two or more press portions,
wherein the cushioning material provided to each press portion of the two or more press portions is a part of the cushioning material structure.

39. A method for producing grafted seedling, the method comprising:
preparing the grafting member according to any one of claims 1 to 16 as a first grafting member, and the grafting member according to any one of claims 1 to 16 as a second grafting member;
bringing the at least one first contact portion of the scion part in the first grafting member into contact with a stem of at least a first plant while the rootstock part is attached to the scion part, and bringing the at least one second contact portion of the rootstock part in the first grafting member into contact with the stem of at least the first plant;
securing the first holder and the second holder in the first grafting member so as to secure the stem of at least the first plant between the at least one first contact portion and the at least one first press portion and between the at least one second contact portion and the at least one second press portion;
cutting the stem of at least the first plant in the space between the first holder and the second holder in the first grafting member;
bringing the at least one first contact portion of the scion part in the second grafting member into contact with a stem of at least a second plant while the rootstock part is attached to the scion part, and bringing the at least one second contact portion of the rootstock part in the second grafting member into contact with the stem of at least the second plant;
securing the first holder and the second holder in the second grafting member so as to secure the stem of at least the second plant between the at least one first contact portion and the at least one first press portion and between the at least one second contact portion and the at least one second press portion;
cutting the stem of at least the second plant in the space between the first holder and the second holder in the second grafting member; and
joining a cut surface of the stem of at least the first plant secured by the scion part of the first grafting member and a cut surface of the stem of at least the second plant secured by the rootstock part of the second grafting member.

40. A method for producing grafted seedling, the method comprising:
preparing the first grafting member and the second grafting member of the grafting member set according to any one of claims 17 to 31;
bringing the at least one first contact portion of the scion part in the first grafting member into contact with a stem of at least a first plant;
securing the first holder so as to secure the stem of at least the first plant between the at least one first contact portion and the at least one first press portion;
cutting the stem of at least the first plant at a position close to roots of at least the first plant as compared with the first holder;
bringing the at least one second contact portion of the rootstock part in the second grafting member into contact with a stem of at least a second plant;
securing the second holder so as to secure the stem of at least the second plant between the at least one second contact portion and the at least one second press portion;
cutting the stem of at least the second plant at a position away from the roots of at least the second plant as compared with the second holder; and
joining a cut surface of the stem of at least the first plant secured by the scion part of the first grafting member and a cut surface of the stem of at least the second plant secured by the rootstock part of the second grafting member.
